(19) Europäisches Patentamt
European Patent Office
Office européen des brevets

(11) EP 4 787 598 A2

(12) **EUROPEAN PATENT APPLICATION**

(43) Date of publication:
**05.08.2026 Bulletin 2026/32**

(21) Application number: **26154945.5**

(22) Date of filing: **29.01.2026**

(51) International Patent Classification (IPC):
***H01M 50/457*** *(2021.01)* ***H01M 10/0525*** *(2010.01)*
***H01M 50/42*** *(2021.01)* ***H01M 50/429*** *(2021.01)*
***H01M 50/446*** *(2021.01)* ***H01M 50/46*** *(2021.01)*

(52) Cooperative Patent Classification (CPC):
**H01M 10/0525; H01M 50/42; H01M 50/4295; H01M 50/446; H01M 50/457; H01M 50/461**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.01.2025 KR 20250012540**
**31.01.2025 KR 20250012541**
**31.01.2025 KR 20250012544**

(71) Applicant: **SAMSUNG SDI CO., LTD.**
**Yongin-si, Gyeonggi-do 17084 (KR)**

(72) Inventors:
- **KIM, Soo Hee**
  **16678 Gyeonggi-do (KR)**
- **KO, Chang Hong**
  **16678 Gyeonggi-do (KR)**
- **LEE, Eon Mi**
  **16678 Gyeonggi-do (KR)**
- **HAN, Byong Joon**
  **16678 Gyeonggi-do (KR)**
- **HAN, Yoo Bin**
  **16678 Gyeonggi-do (KR)**
- **LEE, Hak Min**
  **16678 Gyeonggi-do (KR)**
- **CHOI, In Hye**
  **16678 Gyeonggi-do (KR)**
- **CHOI, Ji Eun**
  **16678 Gyeonggi-do (KR)**
- **KIM, Jin Seok**
  **16678 Gyeonggi-do (KR)**

(74) Representative: **Michalski Hüttermann & Partner mbB**
**Kaistraße 16A**
**40221 Düsseldorf (DE)**

# (54) SEPARATOR FOR RECHARGEABLE BATTERY AND RECHARGEABLE BATTERY INCLUDING THE SAME

(57) Provided are a separator for a rechargeable battery, and a rechargeable battery including the separator. The separator includes a porous substrate, and a first layer and a second layer located on at least one surface of the porous substrate. The second layer includes a (meth) acrylic adhesive binder having a glass transition temperature of ≥ 50 °C and ≤ 130 °C. The first layer includes a crosslinked product of a mixture of a first binder and a second binder, and a crosslinking agent. The separator also includes a filler. The first binder includes an aqueous binder, the second binder includes a carboxyalkyl cellulose-based compound or a salt thereof. The crosslinking agent includes citric acid.

FIG. 1.

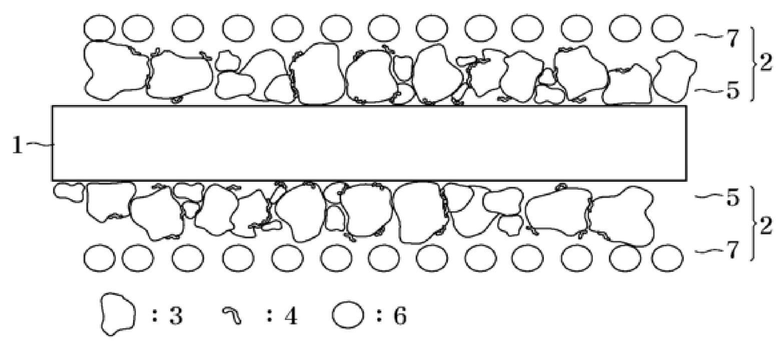




EP 4 787 598 A2

## Description

CROSS-REFERENCE TO RELATED APPLICATION

The present application claims priority to Korean Patent Application No. 10-2025-0012540, filed on January 31, 2025 in the Korean Intellectual Property Office, Korean Patent Application No. 10-2025-0012541, filed on January 31, 2025 in the Korean Intellectual Property Office, and Korean Patent Application No. 10-2025-0012544, filed on January 31, 2025 in the Korean Intellectual Property Office, the entire disclosures of each of the above applications are incorporated herein by reference.

BACKGROUND

### 1. Field of the Disclosure

The present disclosure relates to a separator for a rechargeable battery, and a rechargeable battery including the separator.

### 2. Discussion of Related Art

With increasing presence of electronic devices such as, e.g., mobile phones, notebook computers, electric vehicles, and the like, that use batteries, the demand for secondary batteries having high energy density and high capacity is increasing. Therefore, improving the performance of rechargeable lithium batteries may be advantageous.

A rechargeable lithium battery includes a positive electrode and a negative electrode that contain an active material capable of the intercalation and deintercalation of lithium ions, and produces electric energy by oxidation and reduction reactions when the lithium ions are intercalated into and deintercalated from the positive electrode and the negative electrode.

A rechargeable lithium battery may include a separator between a positive electrode and a negative electrode. The advantage of reducing or preventing ignition and explosion of batteries due to external impact has been emerging, and batteries that can improve the lifespan at high temperatures may be advantageous.

SUMMARY

The present disclosure describes a separator for a rechargeable battery, which can inhibit the ignition and explosion of batteries due to external impact.

The present disclosure also describes a separator for a rechargeable battery, which increases the heat resistance of a battery upon high-temperature exposure and provides a lifespan improvement effect at high temperatures.

The present disclosure also describes a separator for a rechargeable battery, which has a low heat shrinkage rate in an electrolyte and high wet adhesion to a substrate including an electrode.

The present disclosure also describes a high heat-resistant separator for a rechargeable battery, which can inhibit a morphological change in the separator and thus ensure the stability of the battery.

The present disclosure also describes a separator for a rechargeable battery, which has a low dry heat shrinkage rate and a low heat shrinkage rate in an electrolyte.

The present disclosure also describes a separator for a rechargeable battery, which improves the lifespan of the battery and a capacity retention rate.

The present disclosure also describes a separator for a rechargeable battery, which has high substrate adhesion.

The present disclosure also describes a separator for a rechargeable battery, which can inhibit the ignition of batteries due to external impact.

The present disclosure also describes a separator for a rechargeable battery, which can inhibit the ignition and explosion of batteries due to external impact.

The present disclosure also describes a separator for a rechargeable battery, which has a low dry heat shrinkage rate and a low heat shrinkage rate in an electrolyte.

The present disclosure also describes a separator for a rechargeable battery, which has no delamination of a coating layer.

The present disclosure also describes a rechargeable battery, which includes a positive electrode; a negative electrode; and the separator for a rechargeable battery located between the positive and negative electrodes.

One example embodiment includes a separator for a rechargeable battery.

The separator for a rechargeable battery includes a porous substrate, and a first layer and a second layer, which are located on at least one surface of the porous substrate. The second layer includes a (meth)acrylic adhesive binder

having a glass transition temperature of ≥ 50 °C and ≤ 130 °C, and the first layer includes a crosslinked material of a mixture of a first binder and a second binder, and a crosslinking agent. The separator also includes a filler. The first binder is an aqueous binder, the second binder is a carboxyalkyl cellulose-based compound or a salt thereof, and the crosslinking agent contains citric acid. The citric acid is included in a range of ≥ 5 parts by weight to ≤ 50 parts by weight with respect to 100 parts by weight of the total of the first and second binders.

Another example embodiment includes a separator for a rechargeable battery.

The separator for a rechargeable battery includes a porous substrate, and a coating layer located on at least one surface of the porous substrate, wherein the coating layer includes a crosslinked product of a mixture of a first binder and a second binder and a crosslinking agent; and a mixture of a first filler and a second filler. The first binder is an aqueous binder, the second binder is a carboxyalkyl cellulose-based compound or a salt thereof, and the crosslinking agent contains citric acid. The citric acid is included in a range of ≥ 5 parts by weight to ≤ 50 parts by weight with respect to 100 parts by weight of the total of the first binder and the second binder. The second filler is a fibrous filler, and the weight ratio of the second filler to the first filler is in a range of about 1:1 to about 1:200 (the weight ratio is the second filler : the first filler).

Still another example embodiment includes a separator for a rechargeable battery.

The separator for a rechargeable battery includes a porous substrate, and a coating layer located on at least one surface of the porous substrate. The coating layer includes a crosslinked product of a mixture of a first binder and a second binder, and a crosslinking agent; and a filler. The first binder is an aqueous binder, and the second binder is or includes a carboxyalkyl cellulose-based compound or a salt thereof. The crosslinking agent includes a mixture of citric acid and an aziridine-based crosslinking agent, wherein the citric acid and the aziridine-based crosslinking agent are included in a weight ratio in a range of about 80:20 to about 20:80 of 100 parts by weight of the mixture.

Yet another example embodiment includes a rechargeable battery.

The rechargeable battery includes a positive electrode, a negative electrode, and a separator for a rechargeable battery located between the positive electrode and the negative electrode.

The separator for a rechargeable battery according to one example embodiment may inhibit the ignition and explosion of a battery due to external impact, thereby increasing the stability of the battery. In addition, the separator may enhance the reliability of a battery by increasing the heat resistance of the battery upon high-temperature exposure and providing improved the lifespan at high temperatures. In addition, the separator may increase the lifespan of the battery due to a low heat shrinkage rate in an electrolyte and a high wet adhesion.

The separator for a rechargeable battery according to one example embodiment may increase the reliability and stability of the battery by inhibiting its deformation. In addition, the separator may increase the safety of the battery by providing a low dry heat shrinkage rate. In addition, the separator may improve the lifespan of the battery and increase a capacity retention rate. In addition, the separator may increase the reliability of the battery due to high substrate adhesion.

The separator for a rechargeable battery according to one example embodiment may increase the reliability and stability of the battery by inhibiting the ignition and explosion of the battery due to external impact. In addition, the separator may increase the lifespan of the battery due to a low dry heat shrinkage rate and a low heat shrinkage rate in an electrolyte. In addition, the separator may increase the reliability of the battery since the coating layer is not delaminated from a porous substrate.

## BRIEF DESCRIPTION OF THE DRAWINGS

The above and other objects, features and advantages of the present disclosure may become more apparent to those of ordinary skill in the art by describing example embodiments thereof in detail with reference to the accompanying drawings, in which:

FIG. 1 is a cross-sectional view of a separator for a rechargeable lithium battery according to a first example embodiment;
FIG. 2 is a cross-sectional view of a separator for a rechargeable lithium battery according to a second example embodiment;
FIG. 3 is a cross-sectional view of a separator for a rechargeable lithium battery according to a third example embodiment; and
FIG. 4 to FIG. 7 are each a cross-sectional view schematically illustrating a lithium secondary battery according to one example embodiment.

## DETAILED DESCRIPTION

Hereinafter, example embodiments of the present disclosure are described in detail. However, the embodiments are presented as examples, and the present disclosure is not limited thereto, and the present disclosure is only defined by the scope of the appended claims.

Unless otherwise stated herein, when a part such as a layer, a membrane, an area, a plate, and the like, is described as being disposed "on" another part, it includes not only a case where the part is "directly on" another part, but also a case where there are other parts therebetween.

Unless otherwise stated herein, the singular may also include the plural. In addition, unless otherwise stated, the term "A or B" may mean "including A, including B, or including A and B."

In the present specification, "a combination thereof" may mean a mixture, stack, composite, copolymer, alloy, blend, or reaction product of constituents.

Unless otherwise defined herein, 'a particle size D100' may refer to a size of a particle with a cumulative volume of 100% by volume in a particle size distribution. The particle size distribution may be measured by methods known to those skilled in the art. For example, the particle size distribution may be measured using a particle size analyzer, a transmission electron microscope photograph, or a scanning electron microscope photograph. As another method, the particle size distribution may be obtained by measuring the particle size using a measuring device using dynamic light scattering, performing data analysis to count the number of particles for each particle size range, and then calculating the particle size D100 therefrom. Alternatively, the particle size distribution may be measured using a laser diffraction method. When measuring the particle size distribution by the laser diffraction method, for example, the particle size D100 based on 100% of a particle size distribution in the measuring device may be calculated by dispersing particles to be measured in a dispersion medium, then introducing the dispersion medium into a commercially available laser diffraction particle size measuring device (e.g., Microtrac's MT 3000), and radiating ultrasonic waves of about 28 kHz with an output of 60 W.

In this specification, 'a particle size D50' refers to the size of particles having a cumulative volume of 50% by volume in the particle size distribution. The particle size distribution can be obtained by referring to the method described in the above 'a particle size D100'.

If the particle is spherical, the size may mean a diameter.

Hereinafter, unless otherwise defined, "substitution" means that hydrogen in a compound is substituted with a substituent such as or including at least one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N^+(CH_2)_nSO_3^-$, n is a natural number from 1 to 10), a carboxybetaine group ($-RR'N^+(CH_2)_nCOO^-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), a phosphate group ($-PO_3H_2$) or a salt thereof ($-PO_3MH$ or $-PO_3M_2$, here, M denotes an organic or inorganic cation), and a combination thereof.

Hereinafter, the C1 to C3 alkyl group may be a methyl group, an ethyl group, or a propyl group. The C1 to C10 alkylene group may be or include, for example, a C1 to C6 alkylene group, a C1 to C5 alkylene group, or a C1 to C3 alkylene group and may be or include, for example, a methylene group, an ethylene group, or a propylene group. The C3 to C20 cycloalkylene group may be or include, for example, a C3 to C10 cycloalkylene group, or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" means including one or more heteroatoms such as or including at least one of N, O, S, Si, and P.

In addition, in the chemical formulas, the symbol * refers to a part that is connected to the same or different atom, group, or structural unit. Unless otherwise specifically stated in the chemical formulas described herein, hydrogen may be considered to be bonded in the structure of the chemical formula.

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" means "X or more and Y or less ($X\leq$ and $\leq Y$)."

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

## Separator for rechargeable battery according to first example embodiment

The separator may inhibit the ignition and explosion of a battery due to external impact. The separator may

increase the heat resistance of the battery during high-temperature exposure of the battery, and provide the effect of improving the battery lifespan at high temperatures. The separator may have a low heat shrinkage rate in an electrolyte and high wet adhesion.

The separator may increase the safety of the battery by inhibiting the ignition and explosion of the battery due to external impact. In addition, the separator may increase the reliability of the battery by increasing the heat resistance of the battery during the high-temperature exposure of the battery and providing the effect of improving the battery lifespan at high temperatures. In addition, the separator may increase the lifespan of the battery due to a low heat shrinkage rate in an electrolyte and high wet adhesion.

According to one example embodiment, the separator includes a porous substrate, and a first layer and a second layer, which are located on at least one surface of the porous substrate, wherein the second layer includes a (meth)acrylic adhesive binder having a glass transition temperature of ≥ 50 °C and ≤ 130 °C, and the first layer includes a crosslinked material of a mixture of a first binder and a second binder, and a crosslinking agent; and a filler. The first binder is an aqueous binder, the second binder is or includes a carboxyalkyl cellulose-based compound or a salt thereof, and the crosslinking agent contains citric acid, wherein the citric acid is included in a range of ≥ 5 parts by weight to ≤ 50 parts by weight with respect to 100 parts by weight of the total of the first and second binders.

The citric acid may be crosslinked with the first binder, thereby lowering the heat shrinkage rate of the separator in an electrolyte. In one example embodiment, the separator may have a heat shrinkage rate of about 13.0% or less, for example, about 10.0% or less, measured after being left in an electrolyte at about 150 °C for about 1 hour.

As the separator includes a crosslinked product of a mixture of the first binder and the second binder and the crosslinking agent, that is, a crosslinked product of the first binder, a carboxyalkyl cellulose-based compound or a salt thereof, and citric acid, it can be easier to increase the heat resistance of the battery upon high-temperature exposure of the battery, and to provide the effect of improving the battery lifespan at high temperatures.

The citric acid is or includes a polycarboxylic acid with hydroxy groups as shown in the following chemical formula.

Chemical formula:

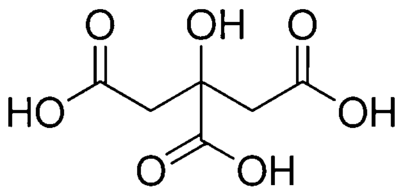

.

The citric acid may be crosslinked with a carboxyalkyl cellulose-based compound or a salt thereof, and also crosslinked with the first binder The citric acid has high dispersibility in the mixture of the first binder and the carboxyalkyl cellulose-based compound or a salt thereof, and is highly crosslinked with each of the first binder and the carboxyalkyl cellulose-based compound or a salt thereof, and therefore the citric acid can facilitate an increase in the modulus of the first layer. The increase in modulus of the first layer may facilitate the improvement in the heat resistance of the battery upon high-temperature exposure of the battery and the improvement in the battery lifespan at high temperatures.

The citric acid is included in a range of ≥ 5 parts by weight to ≤ 50 parts by weight with respect to 100 parts by weight of the total of the first binder and the second binder.

When the content of the citric acid is ≤ 5 parts by weight with respect to a total of 100 parts by weight, the increase in the modulus of the first layer is low or insignificant, which can make it challenging to inhibit the ignition and explosion of a battery due to external impact, and can be insufficient for improving the battery's heat resistance upon high-temperature exposure of the battery.

Cell characteristics of a battery with the separator may be evaluated by the following method.

A cylindrical cell having the separator and a state of charge (SOC) of 50% was evaluated using the international standard UN internal short circuit test method (referred to as the UN impact test). In this method, the cell was placed on a test block (SS41 steel, plate, thickness: 70 mm), and a cylindrical weight of 9.1±0.1 kg with a diameter of 15.8±0.1 mm was freely dropped onto the cell from a height of 630±25 mm to check for battery explosion or ignition. The number of samples of a total of the evaluated samples (10 samples) that pass the impact test (i.e., exhibited no cell explosion, rupture, or ignition) is counted. When the number of samples that fail the test is 2 or less, the cylindrical cell can be used as batteries, and when the number is 3 or more, the cylindrical cell cannot be used as batteries.

When the content of the citric acid is ≥ 50 parts by weight with respect to a total of 100 parts by weight, the effect of improving the battery lifespan at high temperatures may be low or insignificant.

In one example embodiment, the citric acid may be included at 5, 6, 7, 8, 9, 10, 11, 12, 13, 14, 15, 16, 17, 18, 19, 20,

21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, 10 to 50 parts by weight, or 10 to 20 parts by weight with respect to a total of 100 parts by weight. Within the above range, the significant effects of the separator described above can be exhibited.

In one example embodiment, the content of the total of the first binder and the second binder may be about 95 wt% or more, for example, a range of ≥ 95 wt% to ≤ 100 wt%, or 99 w% to 100 wt%, or 100 wt% of the mixture. Within the above range, the above-described effects of the separator can be readily achieved.

In one example embodiment, the citric acid may be included at about 95 wt% or more, for example, a range of ≥ 95 wt% to ≤ 100 wt%, 99 wt% to 100 wt%, or 100 wt% of the crosslinking agent. Within the above range, the above-described effects of the separator can be readily achieved.

In one example embodiment, the crosslinked product may be or include a thermally crosslinked product.

In one example embodiment, the first layer may be formed of or include a composition for the first layer, which includes the first binder, the second binder, that is, the carboxyalkyl cellulose-based compound or a salt thereof, the crosslinking agent, such as citric acid, and a filler.

The second layer includes a (meth)acrylic adhesive binder, and the (meth)acrylic adhesive binder has a glass transition temperature of ≥ 50 °C and ≤ 130 °C.

When the glass transition temperature is about 50 °C or less, an increase of the heat resistance of the battery upon the high-temperature exposure and an improvement of the battery lifespan at high temperatures may be low or insignificant. When the glass transition temperature is about 130 °C or more, the reliability of the battery may be lower due to low wet adhesion of the separator, an increase of the heat resistance of the battery at high-temperature exposure and an improvement of the battery lifespan at high temperatures may be low or insignificant.

For example, the (meth)acrylic adhesive binder may have a glass transition temperature of 51 °C, 52, 53, 54, 55, 56, 57, 58, 59, 60, 61, 62, 63, 64, 65, 66, 67, 68, 69, 70, 71, 72, 73, 74, 75,76, 77, 78, 79, 80, 81, 82, 83, 84, 85, 86, 87, 88, 89, 90, 91, 92, 93, 94, 95, 96, 97, 98, 99, 100, 101,102,103, 104, 105, 106, 107, 108, 109, 110, 111, 112, 113, 114, 115, 116, 117, 118, 119, 120, 121, 122, 123, 124, 125, 126, 127, 128, or 129 °C, or a range of ≥ 60 °C to ≤ 120 °C.

In the specification, "glass transition temperature" may be measured through differential scanning calorimetry (DSC), but the present disclosure is not limited thereto. For example, the glass transition temperature may be determined with the inflection point of an endothermic transition curve, after obtaining data from the endothermic transition curve when the adhesive binder is heated to 180 °C at a rate of 20 °C/min, gradually cooled to -100 °C, and then reheated to 100 °C at a rate of 10 °C/min.

In one example embodiment, the separator may have a wet adhesion of about 0.1 gf/mm or more.

Hereinafter, each component of the composition for a first coating layer is described in detail.

First binder

The first binder must be included at an appropriate content with respect to the second binder. The first binder and the second binder may be included in a weight ratio (the first binder : the second binder) in a range of about 80:20 to about 20:80 with respect to 100 parts by weight of the total of the first binder and the second binder. Within the above range, the separator can exhibit a lower dry heat shrinkage rate, a lower heat shrinkage rate in an electrolyte, and higher substrate adhesion. For example, the weight ratio of the first binder to the second binder may be about 80:20, 75:25, 70:30, 65:35, 60:40, 55:45, 50:50, 45:55, 40:60, 35:65, 30:70, 25:75, 20:80, in a range of about 80:20 to about 25:75, or 80:20 to 30:70. Within the above range, the above-described effects of the separator can be significantly exhibited.

The first binder is or includes an aqueous binder. Since the aqueous binder has high dispersibility in the composition for a coating layer, which includes carboxyalkyl cellulose-based compound or a salt thereof and citric acid, it may be possible to achieve the effects of the separator.

The first binder may be or include an aqueous heat-resistant binder, which may be or include a (meth)acrylic binder.

The first binder may include one or more of the crosslinking units with the citric acid, for example, the unit derived from (meth)acrylic acid or a salt thereof, the unit derived from (meth)acrylamide, the unit derived from hydroxyalkyl (meth) acrylate, the unit derived from (met)acrylonitrile, the unit derived from (meth)acrylamido-2-methylpropanesulfonic acid or a salt thereof, and the unit derived from ethyleneimine.

In one example embodiment, the crosslinking unit with the citric acid may be included in a range of ≥ 10 mol% to ≤ 100 mol%, for example, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 mol%, or 10 mol% to 95 mol%, for example, 30 mol% to 95 mol% of the first binder. Within the above range, the modulus of the coating layer can be increased, and an increase in air permeability resulting from the substantially or excessively high modulus of the coating layer can be reduced or prevented.

The (meth)acrylic binder may include a structural unit containing a sulfonate group. The structural unit containing

a sulfonate group may be beneficial for improving the heat resistance and membrane resistance of the separator.

The structural unit containing a sulfonate group may be included in a range of ≥ 0.1 mol% to ≤ 65 mol%, for example, 0.1 mol% to 60 mol%, 0.1 mol% to 20 mol%, 0.1 mol% to 10 mol%, 1 mol% to 20 mol%, for example, 1 mol% to 10 mol%, for example, 20 mol% to 65 mol%, or 30 mol% to 65 mol% of the (meth)acrylic binder. When the structural unit containing a sulfonate group falls within the above range, the separator can exhibit desired or improved adhesion, heat resistance, air permeability, and oxidation resistance.

The (meth)acrylic binder may further include one or more of a structural unit derived from (meth)acrylate or (meth) acrylic acid, a structural unit containing a cyano group, and a structural unit derived from (meth)acryl amide.

Preferably, the (meth)acrylic binder may include a structural unit derived from (meth)acrylate or (meth)acrylic acid, and for example, a structural unit derived from (meth)acrylic acid. The structural unit derived from (meth)acrylic acid may provide a crosslink site with the citric acid.

The structural unit derived from (meth)acrylate or (meth)acrylic acid may be included in a range of ≥ 0 mol% to ≤ 70 mol%, for example, 10 mol% to 70 mol%, 10 mol% to 60 mol%, 20 mol% to 60 mol%, 10 mol% to 50 mol%, 30 mol% to 60 mol%, 10 mol% to 40 mol%, or 40 mol% to 55 mol% of the (meth)acrylic binder. Within the above range, the separator can exhibit desired or improved adhesion, heat resistance, air permeability, and oxidation resistance.

The structural unit containing a cyano group may be included in a range of ≥ 0 mol% to ≤ 85 mol%, for example, 30 mol% to 85 mol%, 30 mol% to 70 mol%, 30 mol% to 60 mol%, 35 mol% to 60 mol%, or 35 mol% to 55 mol% of the (meth) acrylic binder. Within the above range, the separator can ensure desired or improved oxidation resistance, and exhibit adhesion, heat resistance, and air permeability.

The structural unit derived from (meth)acrylamide may be included in a range of ≥ 0 mol% to ≤ 95 mol%, for example, 40 mol% to 85 mol%, 50 mol% to 85 mol%, 55 mol% to 95 mol%, 60 mol% to 85 mol%, 75 mol% to 95 mol%, or 80 mol% to 95 mol% of the (meth)acrylic binder. Within the above range, the separator can ensure desired or improved oxidation resistance, and exhibit adhesion, heat resistance, and air permeability.

According to one example embodiment, the (meth)acrylic binder may have a range of ≥ 0.1 mol% to ≤ 30 mol%, for example, 0.1 mol% to 10 mol% of a structural unit containing a sulfonate group, a range of ≥ 10 mol% to ≤ 60 mol%, for example, 10 mol% to 40 mol% of a structural unit derived from (meth)acrylate or (meth)acrylic acid, and a range of ≥ 30 mol% to ≤ 85 mol%, for example, 30 mol% to 80 mol% of a structural unit containing a cyano group (referred to as binder 1-1). In one example embodiment, the total of the structural unit containing a sulfonate group, the structural unit derived from (meth)acrylate or (meth)acrylic acid, and the structural unit containing a cyano group may be included at about 95 mol% or more, for example, 95 to 100 mol%, or 100 mol% with respect to 100 mol% of the (meth)acrylic binder.

According to another example embodiment, the (meth)acrylic binder may have a range of ≥ 1 mol% to ≤ 20 mol%, for example, 5 to 20 mol% of a structural unit containing a sulfonate group, and 80 to 99 mol%, for example, 80 to 95 mol% of a structural unit derived from (meth)acryl amide (referred to as binder 1-2). In one example embodiment, the total of the structural unit containing a sulfonate group and the structural unit derived from (meth)acryl amide may be included at about 95 mol% or more, for example, a range of ≥ 95 mol% to ≤ 100 mol%, or 100 mol% with respect to 100 mol% of the (meth) acrylic binder.

According to still another example embodiment, the (meth)acrylic binder may have a structural unit containing a sulfonate group, a structural unit derived from (meth)acrylate or (meth)acrylic acid, and a structural unit derived from (meth)acryl amide (referred to as binder 1-3). In one example embodiment, the total of the structural unit containing a sulfonate group, the structural unit derived from (meth)acrylate or (meth)acrylic acid, and the structural unit derived from (meth)acryl amide may be included at about 95 mol% or more, for example, a range of ≥ 95 mol% to ≤ 100 mol%, or 100 mol% with respect to 100 mol% of the (meth)acrylic binder.

For example, the (meth)acrylic binder may be the binder 1-1 or the binder 1-2. The binder 1-1 or the binder 1-2 may have better effects of improving membrane resistance and heat resistance.

Each structural unit of the (meth)acrylic binder is described in detail below.

The structural unit derived from (meth)acrylate or (meth)acrylic acid may be represented by, for example, at least one of Chemical Formula 1, 2, or 3 below, or a combination thereof:

Chemical Formula 1:

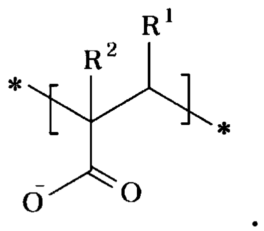

Chemical Formula 2:

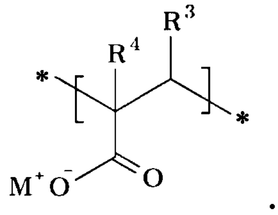

Chemical Formula 3:

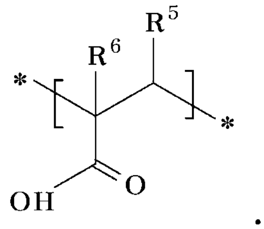

In Chemical Formulas 1 to 3,

$R^1$ to $R^6$ each independently is or includes hydrogen or a methyl group, and
in Chemical Formula 2,
M is or includes an alkali metal.

The alkali metal may be or include, for example, at least one of lithium, sodium, potassium, rubidium, or cesium.

In one example, the structural unit derived from (meth)acrylate or (meth)acrylic acid may include the structural unit represented by Chemical Formula 2 and the structural unit represented by Chemical Formula 3. In this case, the structural unit represented by Chemical Formula 2 and the structural unit represented by Chemical Formula 3 may be included in a molar ratio in a range of about 10:1 to about 1:2, 10:1 to 1:1, or 5:1 to 1:1.

The structural unit containing a cyano group may be represented by, for example, Chemical Formula 4 below.

Chemical Formula 4:

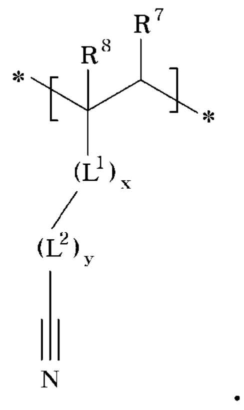

In Chemical Formula 4,

$R^7$ and $R^8$ each independently is or includes hydrogen or a C1 to C3 alkyl group,
$L^1$ is or includes -C(=O)-, -C(=O)O-, -OC(=O)-, -O-, or -C(=O)NH-,
x is an integer in a range of 0 to 2,
$L^2$ is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and

y is an integer in a range of 0 to 2.

The structural unit containing a cyano group may be or include, for example, a structural unite derived from (meth) acrylonitrile, alkenenitrile, cyanoalkyl(meth)acrylate, or 2-(vinyloxy)alkanenitrile. Here, the alkene may be or include C2 to C20 alkene, C2 to C10 alkene, or C2 to C6 alkene, the alkyl may be C1 to C20 alkyl, C1 to C10 alkyl, or C1 to C6 alkyl, and the alkane may be or include C1 to C20 alkane, C1 to C10 alkane, or C1 to C6 alkane.

The alkenenitrile may be or include, for example, allyl cyanide, 4-pentenenitrile, 3-pentenenitrile, 2-pentenenitrile, or 5-hexenenitrile. The cyanoalkyl(meth)acrylate may be or include, for example, cyanomethyl(meth)acrylate, cyanoethyl(meth)acrylate, cyanopropyl(meth)acrylate, or cyanooctyl(meth)acrylate. The 2-(vinyloxy)alkanenitrile may be or include, for example, 2-(vinyloxy)ethanenitrile, or 2-(vinyloxy)propanenitrile.

The structural unit containing a sulfonate group may be a structural unit containing a conjugate base of sulfonic acid, sulfonate, sulfonic acid ester, or a derivative thereof. For example, the structural unit containing a sulfonate group may be represented by at least one of Chemical Formula 5, 6, or 7 below, or a combination thereof.

Chemical Formula 5:

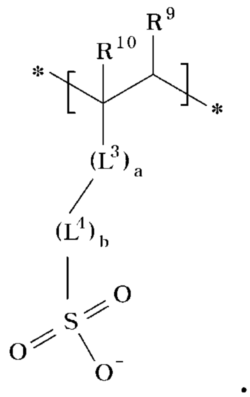

Chemical Formula 6:

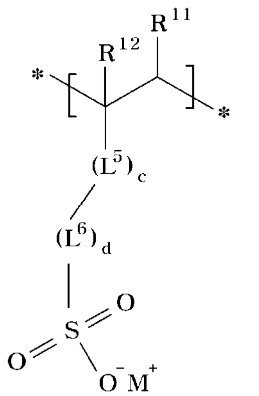

Chemical Formula 7:

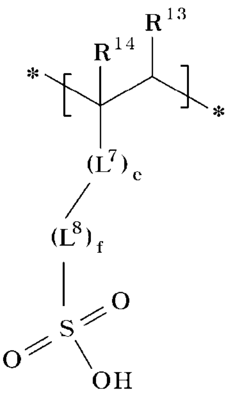

In Chemical Formulas 5 to 7,

$R^9$ to $R^{14}$ each independently is or includes hydrogen or a C1 to C3 alkyl group,
$L^3$, $L^5$, and $L^7$ each independently is or includes -C(=O)-, -C(=O)O-, -OC(=O)-, -O-, or -C(=O)NH-,
$L^4$, $L^6$, and $L^8$ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
a, b, c, d, e, and f are each independently an integer in a range of 0 to 2, and
in Chemical Formula 6,
M is or includes an alkali metal.

As an example, in Chemical Formulas 5 to 7,

$L^3$, $L^5$, and $L^7$ may each be or include independently -C(=O)NH-,
$L^4$, $L^6$, and $L^8$ may each be or include independently a C1 to C10 alkylene group, and
each of a, b, c, d, e, and f may be equal to the integer 1.

The structural unit containing a sulfonate group may include only one, or two or more of, a structural unit represented by Chemical Formula 5, a structural unit represented by Chemical Formula 6, and a structural unit represented by Chemical Formula 7. In one example, the structural unit containing a sulfonate group may include a structural unit represented by Chemical Formula 6, and in another example, the structural unit containing a sulfonate group may include a structural unit represented by Chemical Formula 6 and a structural unit represented by Chemical Formula 7.

The structural unit containing a sulfonate group may be or include, for example, a structural unit derived from at least one of vinyl sulfonic acid, allyl sulfonic acid, styrene sulfonic acid, anethole sulfonic acid, (meth)acrylamidoalkane sulfonic acid, sulfoalkyl (meth)acrylate, or a salt thereof. Here, the alkane may be or include C1 to C20 alkane, C1 to C10 alkane, or C1 to C6 alkane, and the alkyl may be C1 to C20 alkyl, C1 to C10 alkyl, or C1 to C6 alkyl. The salt may consist of or include the above-described sulfonic acid and an appropriate ion. The ion may be, for example, an alkali metal ion, and in this case, the salt may be or include a sulfonic acid alkali metal salt.

The (meth)acrylamidoalkane sulfonic acid may be or include, for example, 2-(meth)acrylamido-2-methylpropane sulfonic acid, and the sulfoalkyl (meth)acrylate may be or include, for example, 2-sulfoethyl (meth)acrylate or 3-sulfopropyl (meth)acrylate.

The structural unit derived from (meth)acrylamide may be represented by Chemical Formula 8 below.

Chemical Formula 8:

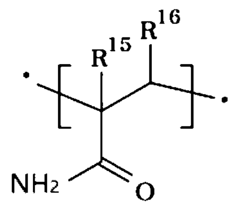

.

In Chemical Formula 8,
$R^{15}$ and $R^{16}$ each independently is or includes hydrogen or a methyl group.

The (meth)acrylic binder may include an alkali metal. The alkali metal may be present in the form of a cation, and may be or include, for example, at least one of lithium, sodium, potassium, rubidium, or cesium. For example, the alkali metal may be conjugated with the (meth)acrylic binder and present in the form of a salt. The alkali metal may contribute to the synthesis of the (meth)acrylic binder in an aqueous solvent, improve the adhesion of the first layer, and improve the heat resistance, air permeability, and oxidation resistance of the separator.

The alkali metal may be included in a range of ≥ 1 wt% to ≤ 40 wt%, for example, 1 wt% to 30 wt%, 1 wt% to 20 wt%, or 10 wt% to 20 wt% of the alkali metal and the (meth)acrylic binder. For example, the (meth)acrylic binder and the alkali metal may be included in a weight ratio in a range of about 99:1 to about 60:40, or a range of 99:1 to 70:30, for example, 99:1 to 80:20, or for example, 90:10 to 80:20.

In addition, the alkali metal may be included in a range of ≥ 0.1 mol% to ≤ 1.0 mol% with respect to the total content of the alkali metal and the (meth)acrylic binder. When the alkali metal falls within the above range, the first layer can have desired or improved adhesion, and a separator including the same can exhibit desired or improved heat resistance, air permeability, and oxidation resistance.

The (meth)acrylic binder may be present in various forms, such as an alternating copolymer in which the structural units are alternately distributed, a random copolymer in which the structural units are distributed arbitrarily, or a graft copolymer in which some structural units are grafted.

The weight average molecular weight (Mw) of the (meth)acrylic binder may be in a range of ≥ 200,000 g/mol to 700,000 g/mol, for example, 200,000 g/mol to 600,000 g/mol, or 300,000 g/mol to 600,000 g/mol. Within the above range, the separator can exhibit desired or improved adhesion, heat resistance, air permeability, and oxidation resistance. In the present specification, the weight average molecular weight may be a polystyrene-converted average molecular weight, which is measured using gel permeation chromatography.

The glass transition temperature of the (meth)acrylic binder may be in a range of ≥ 200 °C to ≤ 280 °C, 210 °C to 270 °C, or 210 °C to 260 °C. Within the above range, the separator can exhibit desired or improved heat resistance, air permeability, and oxidation resistance. The glass transition temperature may be a value measured by differential scanning calorimetry.

The (meth)acrylic binder may have a melting point ($T_m$) of about 160 °C or more.

In the present specification, the "melting point" may be measured by the following method.

Using a differential scanning calorimeter (DSC, apparatus name: DSC Q20, manufacturer: TA instrument), the temperature was increased to heat a material to be measured to 200 °C at 10 °C/min (Cycle 1), cooled to 40 °C at 10 °C/min following isothermality for 1 minute at 200 °C, and then re-heated to 200 °C at 10 °C/min following isothermality for 1 minute at 40 °C (Cycle 2). The temperature at the maximum point of the endothermic peak in the resulting DSC curve was measured as the melting temperature ($T_m$, °C), and the temperature at the maximum point of the exothermic peak was measured as the crystallization temperature ($T_c$, °C). Here, the melting temperature ($T_m$) and the crystallization temperature ($T_c$) are both presented as results measured during the second cycle (Cycle 2) where the temperature was rising and falling.

The (meth)acrylic binder may be prepared by a solution polymerization method.

According to one example embodiment, the (meth)acrylic binder may be included in the first layer of the separator in the form of a film.

**Second binder**

The second binder is a carboxyalkyl cellulose-based compound or a salt thereof. The carboxyalkyl cellulose-based compound or a salt thereof may make it possible to improve the heat resistance of a battery at high temperatures during the combination with the first binder described above and citric acid, and improve the reliability of the battery by providing the effect of improving the lifespan at high temperatures.

Preferably, the second binder may be or include carboxymethyl cellulose or an alkali metal salt thereof, for example, a sodium salt of carboxymethyl cellulose.

The carboxyalkyl cellulose-based compound or a salt thereof may have a weight average molecular weight in a range of ≥ 50,000 g/mol to ≤ 1,000,000 g/mol, for example, 100,000 g/mol to 600,000 g/mol. Within the above range, since the viscosity of the composition for the first layer does not become substantially or excessively high, it can be possible to ensure the dispersibility of citric acid.

## Citric acid

Citric acid may be included in a range of ≥ 5 parts by weight to ≤ 200 parts by weight, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 105, 110, 115, 120, 125, 130, 135, 140, 145, 150, 155, 160, 165, 170, 175, 180, 185, 190, 195, or 200 parts by weight, 5 to 200 parts by weight, or 10 to 100 parts by weight with respect to 100 parts by weight of the first binder. Within the above range, it can be possible to increase the heat resistance of the battery at high-temperature exposure, and increase the reliability of the battery by providing the effect of improving the lifespan at high temperatures.

Citric acid may be included in a range of ≥ 5 parts by weight to ≤ 200 parts by weight, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 105, 110, 115, 120, 125, 130, 135, 140, 145, 150, 155, 160, 165, 170, 175, 180, 185, 190, 195, or 200 parts by weight, 5 to 200 parts by weight, or 10 to 100 parts by weight with respect to 100 parts by weight of the second binder. Within the above range, it can be possible to increase the heat resistance of the battery at high-temperature exposure and to increase the reliability of the battery by improving the lifespan at high temperatures.

## Filler

The filler may have a particle size (D100) of about 0.7 μm or less. Within the above range, it can be possible to achieve the heat shrinkage rate in an electrolyte in the separator. For example, the filler may have a particle size (D100) of 0.05, 0.1, 0.15, 0.2, 0.25, 0.3, 0.35, 0.4, 0.45, 0.5, 0.55, 0.6, 0.65, or 0.7 μm, or 0.55 μm or less, for example, in a range of ≥ 0.3 μm to ≤ 0.5 μm.

According to one example embodiment, the particle size (D50) of the filler may be about 0.4 μm or less, for example, 0.05, 0.1, 0.15, 0.2, 0.25, 0.3, 0.35, or 0.4 μm, or 0.3 μm or less, for example, in a range of ≥ 0.1 μm to ≤ 0.3 μm. Within the above range, the effect of improving heat resistance can be exhibited in the separator.

The filler may be or include, for example, at least one of an inorganic filler, an organic filler, an inorganic/organic composite filler, or a combination thereof. The inorganic filler may be or include a ceramic material that can improve heat resistance. The inorganic filler may include, for example, at least one of a metal oxide, a quasi-metal oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but the present disclosure is not limited thereto. The organic filler may include at least one of an acryl compound, an imide compound, an amide compound, or a combination thereof, but the present disclosure is not limited thereto. The organic filler may have a core-shell structure, but the present disclosure is not limited thereto. Preferably, the filler may include at least one or more of boehmite, $Al_2O_3$, $BaTiO_3$, and $Mg(OH)_2$.

The filler may be spherical, plate-shaped, cubic, or amorphous. For example, the filler may be cubic.

The mass ratio of the mixture of the first binder and the second binder to the filler may be in a range of about 1:10 to about 1:50, for example, 1:10, 1:15, 1:20, 1:25, 1:30, 1:35, 1:40, 1:45, 1:50, or 1:20 to 1:30 with respect to the mixture of the first binder and the second binder. Within the above range, the separator can exhibit an increase in adhesion.

The filler may be included in a range of ≥ 50 wt% to ≤ 99 wt%, for example, 70 wt% to 99 wt%, for example, 75 wt% to 99 wt%, for example, 80 wt% to 99 wt%, for example, 85 wt% to 99 wt%, for example, 90 wt% to 99 wt%, or for example, 95 wt% to 99 wt% with respect to the total weight of the first layer. When the filler concentration is within the above range, desired or improved heat resistance, durability, oxidation resistance, and stability can be exhibited.

The first layer may have a thickness in a range of ≥ 0.01 μm to ≤ 20 μm, for example, 1 μm to 10 μm, 1 μm to 5 μm, or 1 μm to 3 μm.

The first layer may be formed by coating the porous substrate with the composition for a first layer to a predetermined or desired thickness, and aging the resulting porous substrate for a duration of about 15 hours or more, for example, a duration in a range of ≥ 15 hours to ≤ 24 hours, at a temperature in a range of ≥ 85 °C to ≤ 120 °C.

## Second layer

The second layer includes a (meth)acrylic adhesive binder as an adhesive layer. The adhesive binder may have a glass transition temperature of ≥ 50 °C and ≤ 130 °C, for example, in a range of ≥ 60 °C to ≤ 120 °C, and for example, 80 to 100 °C.

In one example embodiment, the (meth)acrylic adhesive binder may include a crosslinked (meth)acrylic adhesive binder. For example, the crosslinked (meth)acrylic adhesive binder may be crosslinked polymethylmethacrylate particles. The crosslinked (meth)acrylic adhesive binder may be prepared by a conventional method known to those of ordinary skill in the art. The crosslinked polymer filler may be prepared by adding a crosslinking agent during the polymerization of monomers.

The crosslinked (meth)acrylic adhesive binder may have a particle size (D50) of about 0.7 μm or less, for example, 0.05, 0.1, 0.15, 0.2, 0.25, 0.3, 0.35, 0.4, 0.45, 0.5, 0.55, 0.6, 0.65, or 0.7 μm, 0.5 μm or less, or 0.2 μm to 0.7 μm. Within the above range, the thickness of the separator can be reduced by forming an adhesive layer with a uniform thickness.

In another example embodiment, the (meth)acrylic adhesive binder may be or include a core-shell (meth)acrylic adhesive binder.

The core-shell (meth)acrylic adhesive binder may be or include a swelling adhesive binder. The swelling adhesive binder is a binder with desired or improved heat resistance and adhesion.

The swelling adhesive binder may exhibit wet adhesion at low temperatures under low pressure by including a first structural unit derived from a vinyl aromatic monomer; a second structural unit derived from an alkyl (meth)acrylate; and a third structural unit derived from a phosphonate-based monomer.

The first structural unit derived from the vinyl aromatic monomer may be represented by Chemical Formula 9 below.

The second structural unit derived from the alkyl (meth)acrylate may be represented by Chemical Formula 10 below.

The third structural unit derived from the phosphonate-based monomer may be represented by Chemical Formula 11 below.

Chemical Formula 9:

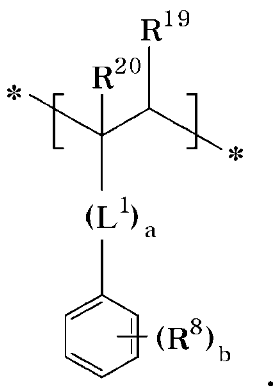

Chemical Formula 10:

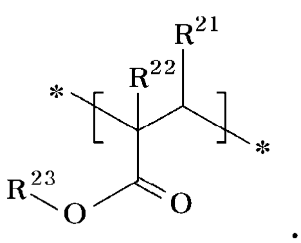

Chemical Formula 11:

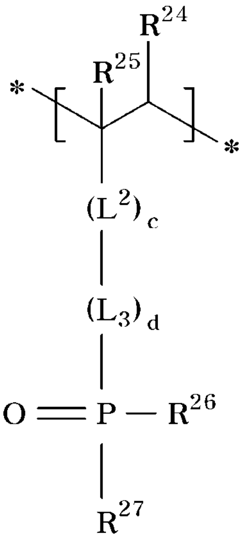

Descriptions of Chemical Formulas 9 to 11 are as follows:
$R^{19}$, $R^{20}$, $R^{21}$, $R^{22}$, $R^{24}$, and $R^{25}$ may each be or include independently hydrogen or a C1 to C6 alkyl group. For example, $R^{19}$, $R^{20}$, $R^{21}$, $R^{22}$, $R^{24}$, and $R^{25}$ may be hydrogen or a methyl group.

$R^8$ may be or include fluorine, a substituted or unsubstituted C1 to C6 alkyl group, a substituted or unsubstituted C6 to C20 alkyl group, or a substituted or unsubstituted C2 to C6 alkenyl group.

$R^{23}$ may be or include a substituted or unsubstituted C1 to C20 alkyl group. For example, as a branched substituted or unsubstituted C1 to C20 alkyl group, $R^{23}$ may be or include an ethylhexyl group.

$L^1$ may be or include at least one of a substituted or unsubstituted C1 to C6 alkylene group, a substituted or unsubstituted C3 to C10 cycloalkylene group, a substituted or unsubstituted C6 to C20 arylene group or a combination thereof.

$L^2$ and $L^3$ may each be or include independently at least one of a carboxyl group (-C(=O)O-), a carbonyl group (-C(=O)-), an ether group (-O-), a substituted or unsubstituted C1 to C6 alkylene group, a substituted or unsubstituted C3 to C10 cycloalkylene group, a substituted or unsubstituted C6 to C20 arylene group, or a combination thereof. For example, $L^2$ may be or include a carboxyl group (-C(=O)O-). For example, $L^3$ may be or include a substituted or unsubstituted C1 to C6 alkylene group, or a methylene group.

$R^{26}$ and $R^{27}$ may each be or include independently a substituted or unsubstituted C1 to C10 alkoxy group or a substituted or unsubstituted C6 to C20 aryloxy group. For example, $R^{26}$ and $R^{27}$ may both be or include a substituted or unsubstituted C1 to C10 alkoxy group or a methoxy group.

a, c, and d may each be independently an integer in a range of 0 to 2, and b may be an integer in a range of 0 to 5. For example, a may be equal to 0, b may be equal to 0, c may be equal to 1, and d may be equal to 1.

The swelling adhesive binder may be formed in particles, which may not be dissolved in an aqueous solvent to remain as particles.

The swelling adhesive binder may be or include particles with a core-shell structure. With the particles with a core-shell structure, it may be possible to ensure appropriate particle size (D50) and swelling degree.

The component of the core may be or include, but is not particularly limited to, for example, a (meth)acrylic polymer, a diene-based polymer or a mixture thereof, or a copolymer thereof. For example, the core may be or include a copolymer of one or more of an alkyl (meth)acrylate and a vinyl aromatic monomer.

The shell may include a first structural unit derived from the vinyl aromatic monomer; a second structural unit derived from the alkyl (meth)acrylate; and a third structural unit derived from the phosphonate-based monomer.

According to one example embodiment, with respect to 100 wt% of the shell, the first structural unit may be included in a range of ≥ 40 wt% to ≤ 90 wt%, or 50 wt% to 80 wt%, the second structural unit may be included in a range of ≥ 5 wt% to ≤ 40 wt%, or 10 wt% to 30 wt%, and the third structural unit may be included in a range of ≥ 0.1 wt% to ≤ 20 wt%, or 5 wt% to 20 wt%. Within the above range, the second layer can achieve desired or improved adhesion with only a small thickness without reducing the heat resistance of the separator.

The particle size (D50) of the swelling adhesive binder may be in a range of about 0.1 μm to 1 μm, 0.2 μm to 0.9 μm, 0.2 μm to 0.8 μm, or 0.2 μm to 0.7 μm. Within the above range, the second layer can achieve desired or improved adhesion with only a small thickness without reducing the heat resistance of the separator.

The swelling adhesive binder may swell to a range of ≥ 2 times to ≤ 1000 times, 3 times to 1000 times, or 6 times to 1000 times the initial volume after being left at 60 °C for 72 hours. Within the above range, the swelling adhesive binder is advantageous for the expression of wet adhesion at low temperatures under low pressure, and the second layer can achieve desired or improved adhesion with only a small thickness without reducing the heat resistance and air permeability of the separator. "Swelling degree" means the degree of expansion compared to the initial volume after adding the binder to an electrolyte and leaving the binder at 60 °C for 72 hours. The electrolyte contains about 1.3 M $LiPF_6$, and is a mixed solution of ethyl carbonate (EC)/ethylmethyl carbonate (EMC)/diethyl carbonate (DEC) (a volume ratio of about 3/5/2).

The weight average molecular weight of the swelling adhesive binder may be in a range of ≥ 100,000 g/mol to ≤ 800,000 g/mol, or 300,000 g/mol to 500,000 g/mol.

The swelling adhesive binder may be readily prepared by a method of preparing core-shell particles known to those of ordinary skill in the art.

In the second layer, the load amount of the adhesive binder may be in a range of about 0.05 $g/m^2$ to 1 $g/m^2$, for example, 0.05 $g/m^2$to 0.4 $g/m^2$.

## Porous substrate

A porous substrate may be or include a substrate with multiple pores that is conventionally used in an electrochemical device. The porous substrate may be unlimitedly a polymer film formed of or including any one polymer such as or including at least one of polyolefins such as polyethylene, polypropylene, and the like, polyesters such as polyethyleneterephthalate, polybutyleneterephthalate, and the like, polyacetal, polyamide, polyimide, polycarbonate, polyetheretherketone, polyaryletherketone, polyetherimide, polyamideimide, polybenzimidazole, polyethersulfone, polyphenyleneoxide, a cyclic olefin copolymer, polyphenylenesulfide, polyethylenenaphthalate, glass fibers, Teflon, and polytetrafluoroethylene, or a copolymer or mixture of two or more thereof.

The porous substrate may be or include, for example, a polyolefin-based substrate including a polyolefin, and the polyolefin-based substrate may contribute to the improvement in battery safety due to a desired or improved shutdown function. For example, the polyolefin-based substrate may be or include at least one of a polyethylene single membrane, a polypropylene single-layer membrane, a polyethylene/polypropylene double-layer membrane, a polypropylene/polyethylene/polypropylene triple-layer membrane, and a polyethylene/polypropylene/polyethylene triple-layer membrane. For example, aside from an olefin resin, the polyolefin-based resin may include a non-olefin resin or a copolymer of an olefin monomer and a non-olefin monomer.

The porous substrate may have a thickness in a range of about 1 μm to 40 μm, for example, 1 μm to 30 μm, 1 μm to 20 μm, or 5 μm to 15 μm.

The separator for a rechargeable lithium battery according to one example embodiment may exhibit desired or improved air permeability, and may have an air permeability value of ≤ 200 sec/100 cc, for example, about 190 sec/100 cc or less, or about 180 sec/100 cc or less. That is, the separator may have an air permeability of ≤ 40 sec/100 cc·1 μm, for example, about 30 sec/100 cc·1 μm or less, or 2 about 5 sec/100 cc·1 μm or less per unit thickness. Here, the air permeability is the time (seconds) it takes for 100 cc of air to pass through the unit thickness of the separator. The air permeability per unit thickness may be obtained by measuring the air permeability for the total thickness of the separator and dividing the air permeability by the thickness. The air permeability may be measured by using an air permeability measuring device (Asahi Seiko, EG01-55-1MR) to measure the time (seconds) it takes for 100 cc of air to pass through.

FIG. 1 is a cross-sectional view of a separator for a rechargeable battery according to one example embodiment.

Referring to FIG. 1, the separator for a rechargeable lithium battery includes a porous substrate 1; and a coating layer 2 located on both surfaces of the porous substrate 1. The coating layer 2 includes a first layer 5 and a second layer 7, located, e.g., sequentially located, on one surface of the porous substrate 1. The first layer 5 includes a filler 3; and a crosslinked product 4 of a first binder, a second binder, and a crosslinking agent, and the second layer 7 includes an adhesive binder 6.

## Separator for rechargeable battery according to second example embodiment

The separator may ensure the stability of a battery by inhibiting a morphological change therein. The separator may have a low dry heat shrinkage rate and a low heat shrinkage rate in an electrolyte. The separator may improve the lifespan of the battery and a capacity retention rate. The separator may have high substrate adhesion. The separator may inhibit ignition of the battery caused by external impact. The separator may increase the reliability and stability of the battery by inhibiting the deformation of the separator. In addition, the separator may increase the safety of the battery by providing a low heat shrinkage rate. In addition, the separator may improve the lifespan of the battery and increase the capacity retention rate. In addition, the separator may increase the reliability of the battery due to the high substrate adhesion.

According to one example embodiment, the separator includes a porous substrate, and a coating layer located on at least one surface of the porous substrate, wherein the coating layer includes a crosslinked product of a mixture of a

first binder and a second binder, and a crosslinking agent; and a filler, wherein the first binder is an aqueous binder, the second binder is a carboxyalkyl cellulose-based compound or a salt thereof, the crosslinking agent contains citric acid, and the citric acid is included in a range of ≥ 5 parts by weight to ≤ 50 parts by weight with respect to 100 parts by weight of the total of the first and second binders. The filler includes a mixture of a first filler and a second filler, the second filler is a fibrous filler, and the weight ratio (the second filler : the first filler) of the second filler to the first filler is in a range of about 1:1 to about 1:200.

A crosslinked product of a composition in which citric acid is included as a crosslinking gent in the mixture of the first and second binders may form a tight network structure, thereby increasing the reliability and stability of a battery. The coating layer including a first filler and a second filler, which is a fibrous filler, in the crosslinked product may provide a low heat shrinkage rate in an electrolyte and high substrate adhesion, which facilitates the improvement of the lifespan of the battery and the capacity retention rate.

The citric acid is a polycarboxylic acid with hydroxy groups, as shown in the above chemical formula.

The citric acid may be crosslinked with the first binder, and the carboxyalkyl cellulose-based compound or a salt thereof. Since the citric acid has high dispersibility in the mixture of the first binder, and the carboxyalkyl cellulose-based compound or a salt thereof, the citric acid can be highly crosslinked to each of the first binder and the carboxyalkyl cellulose-based compound or a salt thereof, and thus can readily increase the modulus of the crosslinked product. Increasing the modulus of the crosslinked product can form a tight network structure and thus deformation can be resisted.

The coating layer includes the crosslinked product and the mixture of the first and second fillers as a filler, wherein the second filler is a fibrous filler. As is explained below, the first filler is a non-fibrous filler rather than a fibrous one.

Since the second filler has a fibrous form, the second filler fills the space within the first filler in the coating layer to reduce the space, thereby lowering a heat shrinkage rate in an electrolyte. In addition, since the second filler has a fibrous form, the effect of reducing a heat shrinkage rate in an electrolyte may be increased by increasing the degree of contact and interaction with not only the first filler but also with the crosslinked product, and an increase in adhesion of the coating layer to the substrate may facilitate improvement in the lifespan of the battery and in the capacity retention rate. Since the second filler is included in the coating layer, which includes the crosslinked product and the first filler, the mechanical strength thereof may be enhanced, and the heat resistance of the separator is enhanced by increasing the adhesion between the crosslinked product, the filler, and the substrate, a low heat shrinkage rate in an electrolyte may be provided, and the lifespan of the battery and the capacity retention rate may be improved.

For example, the coating layer includes a carboxyalkyl cellulose-based compound or a salt thereof as the second binder, and therefore the second filler may become cellulose-based nanofibers. Interaction between the carboxyalkyl cellulose-based compound or a salt thereof and the cellulose-based nanofibers may be increased by a hydrogen bond.

For example, the first filler may further have a functional group that can interact with the cellulose-based nanofibers on the surface thereof. The functional group may be included in the first filler itself, or may be introduced by modifying the surface of the first filler. For example, the functional group may be or include a hydroxide group, and the first filler may be boehmite.

The weight ratio (the second filler : the first filler) of the second filler to the first filler is in a range of about 1:1 to about 1:200.

When the weight ratio is lower than about 1:1, as the first filler is included at a relatively small amount in the coating layer, both a dry heat shrinkage rate and a heat shrinkage rate in an electrolyte increase.

When the weight ratio is higher than about 1:200, the second filler may be included at a relatively small amount in the coating layer, thereby reducing the adhesion to the crosslinked product and increasing the heat shrinkage rate in an electrolyte.

For example, the weight ratio may be equal to about 1:1, 1:5, 1:10, 1:15, 1:20, 1:25, 1:30, 1:35, 1:40, 1:45, 1:50, 1:55, 1:60, 1:65, 1:70, 1:75, 1:80, 1:85, 1:90, 1:95, 1:100, 1:105, 1:110, 1:115, 1:120, 1:125, 1:130, 1:135, 1:140, 1:145, 1:150, 1:155, 1:160, 1:165, 1:170, 1:175, 1:180, 1:185, 1:190, 1:195, 1:200, in a range of about 1:10 to about 1:200, or in a range of about 1:50 to about 1:100.

The citric acid may be included in a range of ≥ 5 parts by weight to ≤ 50 parts by weight with respect to 100 parts by weight of the total of the mixture of the first binder and the second binder.

When the content of the citric acid is ≤ 5 parts by weight with respect to a total of 100 parts by weight, the increase in the modulus of the coating layer is low or insignificant, and the content of the citric acid is disadvantageous for inhibiting battery ignition and explosion due to external impact. When the content of the citric acid is ≥ 50 parts by weight with respect to a total of 100 parts by weight, the adhesion of the separator to the substrate is lowered, separating the coating layer from the substrate in the separator, thereby degrading reliability.

In one example embodiment, the citric acid may be included at about 5 parts by weight, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, a range of ≥ 10 parts by weight to ≤ 50 parts by weight, or 10 to 20 parts by weight with respect to a total of 100 parts by weight of the total of the mixture of the first binder and the second binder. Within the above range, the significant effects of the separator described above can be exhibited.

In one example embodiment, the separator may have a heat shrinkage rate in each of the machine direction (MD) and the transverse direction (TD) of about 10% or less, for example, about 7% or less, measured after being left at 150 °C for 1 hour. The MD and the TD may be substantially the same direction as the MD and TD of the porous substrate.

In one example embodiment, the separator may have a heat shrinkage rate in each of the MD and TD of about 15% or less, measured after being left in an electrolyte at 150 °C for 1 hour.

In one example embodiment, the separator may have a substrate adhesion of about 2.30 N or more.

In one example embodiment, the separator may inhibit ignition and explosion of the battery due to external impact. In this regard, the external impact to the battery with the separator may be measured by the following method.

A cylindrical cell having the separator and a state of charge (SOC) of 50% was evaluated using the international standard UN internal short circuit test method (referred to as the UN impact test). In this method, the cell was placed on a test block (SS41 steel, plate, thickness: 70 mm), and a cylindrical weight of 9.1$\pm$0.1 kg with a diameter of 15.8$\pm$0.1 mm was freely dropped onto the cell from a height of 630$\pm$25 mm to check for battery explosion or ignition. The number of samples of a total of the evaluated samples (10 samples) that passed the impact test (i.e., exhibited no cell explosion, rupture, or ignition) is presented. If the number of samples that did not pass is 2 or less, the cylindrical cell can be used as batteries, and if the number of failures is 3 or more, the cylindrical cell cannot be used as batteries.

In one example embodiment, the total of the first binder and the second binder may be about 95 wt% or more, for example, in a range of ≥ 95 wt% to ≤ 100 wt%, or 99 wt% to 100 wt%, or 100 wt% of the mixture. Within the above range, the above-described effects of the separator can be readily achieved.

In one example embodiment, the citric acid may be included at about 95 wt% or more, for example, in a range of ≥ 95 wt% to ≤ 100 wt%, 99 wt% to 100 wt%, or 100 wt% of the crosslinking agent. Within the above range, the above-described effects of the separator can be readily achieved.

In one example embodiment, the crosslinked product may be or include a thermally crosslinked product.

In one example embodiment, the coating layer may be formed of or include a composition for a coating layer, which includes the first binder; the second binder, that is, a carboxyalkyl cellulose-based compound or a salt thereof; the crosslinking agent, that is, citric acid; and a first filler and a second filler, wherein the weight ratio of the first filler to the second filler is in a range of about 1:1 to about 1:200.

In one example embodiment, the mixture of the first filler and the second filler may be included at about 95 wt% or more, for example, in a range of ≥ 95 wt% to ≤ 100 wt% or 100 wt% of all the fillers in the composition.

Hereinafter, each component of the coating layer is described in detail.

## First binder

The first binder is substantially the same as the first binder described in "Separator for rechargeable battery according to first example embodiment." Therefore, the detailed description of the first binder is omitted.

## Second binder

The second binder is substantially the same as the second binder described in "Separator for rechargeable battery according to first example embodiment." Therefore, the detailed description of the second binder is omitted.

## First filler

The first filler may be or include a non-fibrous filler rather than a fibrous one. In one example embodiment, the first filler may be spherical, plate-shaped, cubic, or amorphous. Preferably, the first filler may be plate-shaped or cubic.

The first filler may have a particle size (D100) of about 0.7 μm or less. Within the above range, the separator can readily achieve the dry heat shrinkage rate and the heat shrinkage rate in an electrolyte. For example, the first filler may have a particle size (D100) of 0.05, 0.1, 0.15, 0.2, 0.25, 0.3, 0.35, 0.4, 0.45, 0.5, 0.55, 0.6, 0.65, or 0.7 μm, or 0.6 μm or less, for example, a range of ≥ 0.3 μm to ≤ 0.6 μm.

According to one example embodiment, the first filler may have a particle size (D50) of about 0.4 μm or less, for example, 0.05, 0.1, 0.15, 0.2, 0.25, 0.3, 0.35, or 0.4 μm, or 0.3 μm or less, for example, a range of ≥ 0.1 μm to ≤ 0.3 μm. Within the above range, heat resistance of the separator can be improved.

The first filler may be or include, for example, at least one of an inorganic filler, an organic filler, an inorganic/organic composite filler, or a combination thereof. The inorganic filler may be or include a ceramic material that can improve heat resistance. The inorganic filler may contain, for example, at least one of a metal oxide, a quasi-metal oxide, a metal fluoride, a metal hydroxide, or a combination thereof. The inorganic filler may contain, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaSO_4$, $BaTiO_3$, $Mg(OH)_2$, zeolite, boehmite, or a combination thereof, but the present disclosure is not limited thereto. The organic filler may contain at least one of an acryl compound, an imide compound, an amide compound, or a combination thereof, but the present disclosure is not limited

thereto. The organic filler may have a core-shell structure, but the present disclosure is not limited thereto.

For example, the first filler may be boehmite.

The mass ratio of the mixture of the first binder and the second binder to the first filler may be in a range of about 1:10 to about 1:50, for example, 1:10, 1:15, 1:20, 1:25, 1:30, 1:35, 1:40, 1:45, 1:50, or a range of about 1:10 to about 1:30 with respect to the mixture of the first binder and the second binder. Within the above range, the adhesion of the separator can increase.

The first filler may be included in a range of ≥ 50 wt% to ≤ 99 wt%, for example, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, or 99 wt%, 70 to 99 wt%, for example, 75 to 99 wt%, 80 to 99 wt%, 85 to 99 wt%, 90 to 99 wt%, or 95 to 99 wt% of the total amount of the coating layer. Within the above range, the separator can exhibit desired or improved heat resistance, durability, oxidation resistance, and stability.

## Second filler

The second filler may be or include a fibrous filler, which may be nanofibers with a nanometer-scale average diameter. The nanofibers can readily fill the space within the first filler, and reduce or prevent an increase in air permeability of the separator.

For example, the second filler may have an average diameter in a range of ≥ 5 nm to ≤ 200 nm, for example, 5, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, or 200 nm, or 50 to 150 nm, and have an average length in a range of about 0.5 μm to 10 μm, for example, 0.5, 1, 1.5, 2, 2.5, 3, 3.5, 4, 4.5, 5, 5.5, 6, 6.5, 7, 7.5, 8, 8.5, 9, 9.5, or 10 μm, or 0.5 μm to 6 μm. Within the above range, an increase in air permeability of the separator can be reduced or prevented.

The second filler may be or include an organic fiber. This is because the organic fiber, due to its structural similarity with the carboxymethyl cellulose, facilitates binding and has high fluidity, which allows the organic fiber to penetrate the binder layer as well as the first filler, sealing the gaps and thereby forming a robust support layer, which is advantageous for lifespan. The second filler may be or include an organic fiber derived from a cellulose, including at least one of cellulose ester, cellulose ether, and the like, a polyvinylalcohol, a chitin, a chitosan, an alginate, or a polyolefin, including polyethylene. For example, the second filler may be or include a cellulose-based fiber, such as a cellulose ester- or cellulose ether-based fiber. The cellulose-based fiber can readily bind with the crosslinked product due to its strong interaction with the carboxyalkyl celluloses.

The second filler may be or include a non-surface-modified nanofiber or a surface-modified nanofiber. The surface-modified nanofiber can further increase adhesion to the first filler. In one example embodiment, the surface modification may include introduction of a hydrophilic group, such as at least one of a hydroxide group, a carboxylic acid group, an amine group, or an amide group, or a combination thereof to the surface of the nanofiber. The surface modification may be performed by oxidation treatment of the nanofiber or surface treatment with a compound having the functional group. The oxidation treatment may include treatment of the nanofiber with 2,2,6,6-tetramethylpiperidine-1-oxy (TEMPO, free radical), a hydroperoxide, sulfuric acid, or $NaIO_4$.

The second filler may be included in a range of ≥ 0.1 wt% to ≤ 10 wt%, for example, 0.1, 0.5, 1, 1.5, 2, 2.5, 3, 3.5, 4, 4.5, 5, 5.5, 6, 6.5, 7, 7.5, 8, 8.5, 9, 9.5, or 10 wt%, 0.1 to 5 wt%, or 0.1 to 3 wt% of the total amount of the coating layer. Within the above range, the separator can exhibit heat resistance, durability, oxidation resistance, and stability.

In one example embodiment, the weight ratio of the total of the first binder and the second binder to the total of the first filler and the second filler may be in a range of about 1:10 to about 1:50, for example, 1:10, 1:15, 1:20, 1:25, 1:30, 1:35, 1:40, 1:45, 1:50, or 1:10 to 1:30. Within the above range, the above-described effects of the separator can be readily achieved.

The coating layer may have a thickness in a range of ≥ 0.01 μm to ≤ 20 μm, and within this range, the coating layer can have a thickness of 1 μm to 10 μm, 1 μm to 5 μm, or 1 μm to 3 μm.

The ratio of the thickness of the coating layer to the thickness of the porous substrate may be in a range of ≥ 0.05 to ≤ 0.5, for example, 0.05 to 0.4, 0.05 to 0.3, or a range of ≥ 0.1 to ≤ 0.2. Within the above range, the separator can exhibit desired or improved air permeability, heat resistance, and adhesion. Here, "thickness of the coating layer" means the thickness of one coating layer when the coating layer is formed on only one surface of the porous substrate, or the thickness of two coating layers when the coating layer is formed on both surfaces of the porous substrate.

The coating layer may be formed by coating the porous substrate with the composition for a coating layer to a predetermined or desired thickness, and aging the resulting porous substrate for about 15 hours or more, for example, a range of ≥ 15 hours to ≤ 24 hours, at a temperature in a range of ≥ 85 °C to ≤ 120 °C.

## Porous substrate

The porous substrate is substantially the same as the porous substrate described in "Separator for rechargeable

battery according to first example embodiment." Therefore, the detailed description of the porous substrate is omitted.

The separator for a rechargeable lithium battery according to one example embodiment may exhibit desired or improved air permeability of, for example, ≤ 200 sec/100 cc, 190 sec/100 cc or less, or 180 sec/100 cc or less.

FIG. 2 is a cross-sectional view of a separator for a rechargeable lithium battery according to the second example embodiment.

Referring to FIG. 2, the separator for a rechargeable lithium battery includes a porous substrate 1; and a coating layer 2 located on both surfaces of the porous substrate 1. The coating layer 2 includes a first filler 3; a crosslinked product 4 of a first binder, a second binder, and citric acid; and a second filler 8.

## Separator for rechargeable battery according to third example embodiment

The separator may inhibit battery ignition and explosion due to external impact. The separator may have a low dry heat shrinkage rate and a low heat shrinkage rate in an electrolyte. The separator may have no delamination of a coating layer. Since the separator can inhibit battery ignition and explosion due to external impact, the reliability and stability of the battery can increase. In addition, due to the low dry heat shrinkage rate and low heat shrinkage rate in an electrolyte of the separator, the lifespan of the battery can increase. In addition, since no delamination of a coating layer from a porous substrate occurs in the separator, the reliability of the battery can increase.

The separator for a rechargeable battery includes a porous substrate, and a coating layer located on at least one surface of the porous substrate, wherein the coating layer includes a crosslinked product of a mixture of a first binder and a second binder, and a crosslinking agent; and a filler. The first binder is or includes an aqueous binder, the second binder is or includes a carboxyalkyl cellulose-based compound or a salt thereof, the crosslinking agent contains a mixture of citric acid and an aziridine-based crosslinking agent, and the citric acid and the aziridine-based crosslinking agent are included in a weight ratio (the citric acid : the aziridine-based crosslinking agent) in a range of about 80:20 to about 20:80 of 100 parts by weight of the mixture.

The crosslinked product of the composition, in which only citric acid is added as a crosslinking agent to the mixture of the first and second binders, has a high tensile strength, thereby inhibiting ignition and explosion of the battery caused by external impact, and therefore the reliability and stability of the battery can increase. The crosslinked product obtained by crosslinking the mixture including the first and second binders using the mixture of the citric acid and the aziridine-based crosslinking agent as a crosslinking agent may improve both a tensile strength and an elongation rate of the crosslinked product, resulting in providing a low dry heat shrinkage rate and a low heat shrinkage rate in an electrolyte. In addition, it reduces or prevents the coating layer from being delaminated from the porous substrate, thereby further increasing the reliability of the battery. When there is no delamination of the coating layer from the porous substrate, the coating layer still remains on the separator during the manufacture of the battery, thereby improving the processability of battery manufacturing. In a jelly-roll type battery, the separator is wound in a roll form, and therefore battery performance can also increase.

The citric acid is a polycarboxylic acid with hydroxy groups, as shown in the above chemical formula.

The citric acid may be crosslinked with the first binder, and a carboxyalkyl cellulose-based compound or a salt thereof. The citric acid is highly dispersed in the mixture of the first binder, and the carboxyalkyl cellulose-based compound or a salt thereof, and thus is highly crosslinked with each of the first binder, and the carboxyalkyl cellulose-based compound or a salt thereof, which can make it possible to increase the tensile strength of the crosslinked product. Therefore, the citric acid increases the tensile strength of the crosslinked product, thereby making it easier to inhibit ignition and explosion of the battery caused by external impact.

The aziridine-based crosslinking agent may be crosslinked with the first binder, and the carboxyalkyl cellulose-based compound or a salt thereof. The aziridine-based crosslinking agent does not affect the crosslinking induced by the citric acid when the citric acid allows the first binder and the carboxyalkyl cellulose-based compound or a salt thereof to crosslink. However, the aziridine-based crosslinking agent can improve both the tensile strength and the elongation rate of the crosslinked product by itself crosslinking the first binder and the carboxyalkyl cellulose-based compound or a salt thereof. The aziridine-based crosslinking agent has a plurality of crosslinking sites separated from each other, compared to the citric acid. Therefore, the aziridine-based crosslinking agent is considered to facilitate an increase in the elongation rate of the crosslinked product, but the present disclosure is not limited thereto. As the aziridine-based crosslinking agent improves both the tensile strength and the elongation rate of the crosslinked product, ignition and explosion of the battery caused by external impact can be inhibited, a low dry heat shrinkage rate and a low heat shrinkage rate in an electrolyte can be provided, and delamination of the coating layer from the porous substrate can be reduced or prevented. In addition, the aziridine-based crosslinking agent facilitates sufficient crosslinking to achieve the separator of the present disclosure under an aging condition of about 85 °C, compared to an epoxy-based crosslinking agent and a carbodiimide-based crosslinking agent.

The combination of the citric acid and the aziridine-based crosslinking agent as the crosslinking agent is advantageous for reducing or preventing a decrease in the elongation rate of the crosslinked product and increasing

the tensile strength. Without any one of these components of the crosslinking agent, the tensile strength of the crosslinked product may be increased, but the elongation rate may be lowered.

In one example embodiment, the tensile strength of the crosslinked product may be about 100 MPa or more, for example, in a range of ≥ 100 MPa to ≤ 450 MPa, and the elongation rate of the crosslinked product may be about 5% or more, for example, in a range of ≥ 5% to ≤ 70%, or 5% to 50%. Within the above range, the above-described effects of the separator can be readily achieved. The tensile strength and the elongation rate may be measured by a method to be described below.

The citric acid and the aziridine-based crosslinking agent may be included in a weight ratio in a range of about 80:20 to about 20:80 with respect to 100 parts by weight of the mixture.

When the weight ratio is higher than about 80:20, the content of the aziridine-based crosslinking agent is so small that the elongation rate of the crosslinked product is lowered, and it can be easier to delaminate the coating layer from the porous substrate. When the weight ratio is lower than about 20:80, the content of the citric acid is so small that the heat shrinkage rate of the separator can be increased and it can be easier to delaminate the coating layer. For example, the weight ratio may be 80:20, 75:25, 70:30, 65:35, 60:40, 55:45, 50:50, 45:55, 40:60, 35:65, 30:70, 25:75, 20:80, in a range of about 70:30 to about 30:70, or 40:60 to 60:40.

The mixture of the citric acid and the aziridine-based crosslinking agent may be included in a range of ≥ 5 parts by weight to ≤ 50 parts by weight, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight, or 10 parts by weight to 20 parts by weight with respect to 100 parts by weight of a total of the mixture of the first binder and the second binder. Within the above range, the effect of the separator can be readily achieved.

In one example embodiment, the separator may have a heat shrinkage rate in each of MD and TD of about 5.0% or less, measured after being left at about 150 °C for about 1 hour.

In one example embodiment, the total of the first and second binders may be included at about 95 wt% or more, for example, in a range of ≥ 95 wt% to ≤ 100 wt%, 99 wt% to 100 wt%, or 100 wt% of the mixture. Within the above range, the effect of the separator can be readily achieved.

In one example embodiment, the mixture of the citric acid and the aziridine-based crosslinking agent may be included at about 95 wt% or more, for example, in a range of ≥ 95 wt% to ≤ 100 wt%, 99 wt% to 100 wt%, or 100 wt% of the crosslinking agent. Within the above range, the effect of the separator can be readily achieved.

In one example embodiment, the crosslinked product may be or include a thermally crosslinked product.

In one example embodiment, the coating layer may be formed of or include a composition for a coating layer, which includes the first binder; the second binder, that is, a carboxyalkyl cellulose-based compound or a salt thereof; the crosslinking agent, that is, a mixture of citric acid and an aziridine-based crosslinking agent; and a filler.

Hereinafter, each component of the composition for a coating layer is described in detail.

## First binder

The first binder is substantially the same as the first binder described in "Separator for rechargeable battery according to first example embodiment." Therefore, the detailed description of the first binder is omitted.

## Second binder

The second binder is substantially the same as the second binder described in "Separator for rechargeable battery according to first example embodiment." Therefore, the detailed description of the second binder is omitted.

## Citric acid

Citric acid may be included in a range of ≥ 3 parts by weight to ≤ 200 parts by weight, for example, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 105, 110, 115, 120, 125, 130, 135, 140, 145, 150, 155, 160, 165, 170, 175, 180, 185, 190, 195, or 200 parts by weight, or 4 to 150 parts by weight with respect to 100 parts by weight of the first binder. Within the above range, ignition and explosion of the battery caused by external impact can be inhibited, a low heat shrinkage rate can be provided, and delamination of the coating layer from the porous substrate can be reduced or prevented.

Citric acid may be included in a range of ≥ 3 parts by weight to ≤ 200 parts by weight, for example, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 105, 110, 115, 120, 125, 130, 135,

140, 145, 150, 155, 160, 165, 170, 175, 180, 185, 190, 195, or 200 parts by weight, or 3 to 150 parts by weight with respect to 100 parts by weight of the second binder. Within the above range, ignition and explosion of the battery caused by external impact can be inhibited, a low heat shrinkage rate can be provided, and delamination of the coating layer from the porous substrate can be reduced or prevented.

## Aziridine-based crosslinking agent

The aziridine-based crosslinking agent may be or include a bifunctional or more aziridine-based crosslinking agent. Here, "bifunctional or more" means that two or more aziridine groups are present in the molecule. According to one example embodiment, the aziridine-based crosslinking agent may be or include a bifunctional or trifunctional aziridine-based crosslinking agent.

For example, the aziridine-based crosslinking agent may include one or more of N,N'-toluene-2,4-bis(1-aziridinecarboxamide), N,N'-(methylenedi-p-phenylene)bis(aziridine-1-carboxamide), triethylmelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridinepropionate), trimethylolpropane tris(beta-N-aziridinyl)propionate, and pentaerythritol tris(3-(1-aziridinyl)propionate).

For example, the aziridine-based crosslinking agent may be or include an aziridine-based crosslinking agent with a main chain carbon length of about 5 or more.

The aziridine-based crosslinking agent may be included in a range of ≥ 3 parts by weight to ≤ 200 parts by weight, for example, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 105, 110, 115, 120, 125, 130, 135, 140, 145, 150, 155, 160, 165, 170, 175, 180, 185, 190, 195, or 200 parts by weight, or 4 parts by weight to 150 parts by weight with respect to 100 parts by weight of the first binder. Within the above range, ignition and explosion of the battery caused by external impact can be inhibited, a low heat shrinkage rate can be provided, and delamination of the coating layer from the porous substrate can be reduced or prevented.

The aziridine-based crosslinking agent may be included in a range of ≥ 3 parts by weight to ≤ 200 parts by weight, for example, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 105, 110, 115, 120, 125, 130, 135, 140, 145, 150, 155, 160, 165, 170, 175, 180, 185, 190, 195, or 200 parts by weight, or 4 to 150 parts by weight with respect to 100 parts by weight of the second binder. Within the above range, ignition and explosion of the battery caused by external impact can be inhibited, a low heat shrinkage rate can be provided, and delamination of the coating layer from the porous substrate can be reduced or prevented.

## Filler

The filler is substantially the same as the filler described in "Separator for rechargeable battery according to first example embodiment." Therefore, the detailed description of the filler is omitted.

The coating layer may have a thickness in a range of ≥ 0.01 μm to ≤ 20 μm, and within this range, the thickness may be 1 μm to 10 μm, 1 μm to 5 μm, or 1 μm to 3 μm.

The ratio of the thickness of the coating layer to the thickness of the porous substrate may be in a range of ≥ 0.05 to ≤ 0.5, for example, 0.05 to 0.4, 0.05 to 0.3, or 0.1 to 0.2. Within the above range, the separator can exhibit desired or improved air permeability, heat resistance, and adhesion. Here, "thickness of the coating layer" means the thickness of one coating layer when the coating layer is formed on only one surface of the porous substrate, and means the thickness of the two coating layers when the coating layer is formed on both surfaces of the porous substrate.

The coating layer may be formed by coating the porous substrate with the composition for a coating layer to a predetermined or desired thickness, and then aging the coated substrate for about 15 hours or more, for example, a range of ≥ 15 hours to ≤ 24 hours at a temperature in range of ≥ 85 °C to ≤ 120 °C.

## Porous substrate

The porous substrate is substantially the same as the porous substrate described in "Separator for rechargeable battery according to first example embodiment." Therefore, the detailed description of the porous substrate is omitted.

FIG. 3 is a cross-sectional view of the separator for a rechargeable lithium battery according to the third example embodiment.

Referring to FIG. 3, the separator for a rechargeable lithium battery includes a porous substrate 1; and a coating layer 2 located on both surfaces of the porous substrate 1. The coating layer 2 includes a filler 3; and a crosslinked product 4

of a first binder, a second binder, and a crosslinking agent (citric acid and an aziridine-based crosslinking agent).

Rechargeable lithium battery

Another example embodiment includes a rechargeable lithium battery including the separator for a rechargeable lithium battery according to one example embodiment; a positive electrode; and a negative electrode.

The separator for a rechargeable lithium battery refers to the content described above. The separator for a rechargeable lithium battery may be located between the positive electrode and the negative electrode.

Positive electrode

A positive electrode for a rechargeable lithium battery may include a current collector, and a positive electrode active material layer on the current collector. The positive electrode active material layer may include a positive electrode active material, and may further include a binder and/or a conductive material. For example, the positive electrode may further include an additive that can constitute a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof, may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free lithium nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0<\alpha<2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0<\alpha<2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content of greater than or equal to ≤ 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of ≥ 90 wt% to ≤ 99.5 wt% based on 100 wt% of the positive electrode active material layer. Amounts of the binder and the conductive material may be in a range of ≥ 0.5 wt% to ≤ 5 wt%, respectively, based on 100 wt% of the positive electrode active material layer.

The binder attaches the positive electrode active material particles to each other, and also attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., that does not cause an undesirable chemical change in the rechargeable lithium battery) and that conducts electrons, can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector, but the current collector is not limited thereto.

Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include a range of ≥ 90 wt% to ≤ 99 wt% of the negative electrode active material, a range of ≥ 0.5 wt% to ≤ 5 wt% of the binder, and a range of ≥ 0 wt% to ≤ 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may attach the negative electrode active material to the current collector. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause a chemical change (e.g., that does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on the shape thereof.

FIG. 4 to FIG. 7 are schematic views illustrating a rechargeable lithium battery according to an example embodiment. FIG. 4 shows a cylindrical battery, FIG. 5 shows a prismatic battery, and FIGS. 6 and 7 show pouch-type batteries. Referring to FIGS. 4 to 7, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 4. In FIG. 5, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 6 and 7, the rechargeable lithium battery 100 may include an electrode tab 70 illustrated in FIG. 7, or for example, a positive electrode tab 71 and a negative electrode tab 72 illustrated in FIG. 6, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure is described. However, the following examples are merely examples of the present disclosure, and the present disclosure is not limited to the following

examples.

**Preparation Example 1**

In a 10 L four-neck flask equipped with a stirrer, a thermometer, and a condenser, after adding distilled water (6,361 g), acrylamide (9.5 mol), potassium persulfate (0.01 mol), 2-acrylamido-2-methylpropanesulfonic acid (0.5 mol), and a 5 N lithium hydroxide aqueous solution (1.05 equivalent with respect to the total amount of the 2-acrylamido-2-methylpropanesulfonic acid), the operation of reducing the inner pressure to 10 mmHg using a diaphragm pump and returning the pressure to normal pressure with nitrogen was repeated three times. The reaction was performed for 12 hours while controlling the temperature of the reaction solution to be stabilized between about 65 °C and about 70 °C. After cooling to room temperature, the pH of the reaction solution was adjusted to a range of ≥ 7 to ≤ 8 using a 25% aqueous ammonia solution.

By the above-described method, poly(acrylic acid-co-acrylamido-co-2-acrylamido-2-methylpropanesulfonic acid)lithium salt was prepared. The molar ratio of acrylamide:2-acrylamido-2-methylpropanesulfonic acid was 95:5. About 10 mL of the reaction solution (reaction product) was taken and the content of a non-volatile component was measured, which was 9.5wt% (theoretical value: 10wt%).

**Preparation Example 2**

In a 3 L four-neck flask equipped with a stirrer, a thermometer, and a condenser, after adding distilled water (968 g), acrylic acid (0.39 mol), ammonium persulfate (2.85 mmol), 2-acrylamido-2-methylpropanesulfonic acid (0.02 mol), and 20% lithium hydroxide aqueous solution (0.8 equivalent with respect to the total amount of the acrylic acid and 2-acrylamido-2-methylpropanesulfonic acid), the operation of reducing the inner pressure to 10 mmHg using a diaphragm pump and returning the pressure to normal pressure with nitrogen was repeated three times, and acrylonitrile (0.59 mol) was added. The reaction was performed for 18 hours while controlling the temperature of the reaction solution to be stabilized between about 65 °C and about 70 °C, ammonium persulfate (0.95 mmol) was secondarily added, the temperature was elevated to 80 °C, and then the reaction was performed again for 4 hours. After cooling to room temperature, the pH of the reaction solution was adjusted to a range of ≥ 7 to ≤ 8 using a 25% aqueous ammonia solution.

By the above-described method, poly(acrylic acid-co-lithium acrylate-co-acrylonitrile-co-lithium 2-acrylamido-2-methylpropane sulfonate) was prepared as an acrylic binder. The molar ratio of acrylic acid and lithium acrylate, acrylonitrile, and lithium 2-acrylamido-2-methylpropane sulfonate was 39:59:2. About 10 mL of the reaction solution (reaction product) was taken and the content of a non-volatile component was measured, which was 9.0wt% (theoretical value: 10wt%).

**Example 1**

A dispersion was prepared by mixing the acrylic binder prepared in Preparation Example 1 (10 wt% in distilled water) and boehmite (particle size (D100): 500 nm, particle size (D50): 200 nm, plate-shaped) as a filler, adding water as a solvent, milling the resulting mixture using a bead mill at 25 °C for 30 minutes, and then dispersing the milled result.

A composition for a first layer was prepared by adding sodium carboxymethyl cellulose (CMC-Na, weight average molecular weight: 200,000 g/mol) and citric acid to the dispersion, and adding water such that a total solid content became 20 wt%.

The composition for a first layer includes 50 parts by weight of an acrylic binder; 50 parts by weight of CMC-Na; and 10 parts by weight of citric acid with respect to 100 parts by weight of the total of the acrylic binder and the CMC-Na. The composition for a first layer has a weight ratio of a total of the acrylic binder and the CMC-Na to the filler of 1:20.

A first layer was prepared by coating both surfaces of a polyethylene-based film (thickness: 8 μm (SK), air permeability: 120 sec/100 cc, and puncture strength: 480 kgf) as a porous substrate with the composition for a first layer to a thickness of 1 μm through a die coating method, and drying and aging the resulting film in an oven at 100 °C for 16 hours.

A second layer was formed to a total thickness of 1.0 μm by coating one surface of the first layer with 0.5 μm of an adhesive binder (glass transition temperature: 90 °C, and particle size (D50): 0.5 μm), which included a core formed of a copolymer of an alkyl acrylate and divinylbenzene; and a shell having a first structural unit derived from styrene; a second structural unit derived from 2-ethylhexylmethacrylate; and a third structural unit derived from dimethyl[(acryloyloxy)methyl]phosphonate after it was diluted to a solid content of 2 wt% and then the coated layer was dried at 50 °C for 10 minutes, thereby preparing a separator for a rechargeable battery.

**Examples 2 to 7**

Separators were prepared in the same manner as in Example 1, except that the contents of an acrylic binder,

CMC-Na, and citric acid used in Example 1 were changed as shown in Table 1 below.

**Example 8**

A separator was prepared in the same manner as in Example 1, except that the binder of Preparation Example 2 was used instead of the binder of Preparation Example 1.

**Comparative Examples 1 to 5**

Separators were prepared in the same manner as in Example 1, except that the contents of an acrylic binder, CMC-Na, and citric acid used in Example 1 were changed as shown in Table 1 below.

**Comparative Example 6**

A separator was prepared in the same manner as in Example 1, except that crosslinked polymethylmethacrylate (PMMA) with a glass transition temperature of 50 °C was used as the adhesive binder used in Example 1. The crosslinked PMMA with a glass transition temperature of 50 °C was obtained by adjusting the weight average molecular weight of PMMA.

**Comparative Example 7**

A separator was prepared in the same manner as in Example 1, except that crosslinked polymethylmethacrylate (PMMA) with a glass transition temperature of 130 °C was used as the adhesive binder used in Example 1. The crosslinked PMMA with a glass transition temperature of 130 °C was obtained by adjusting the weight average molecular weight of PMMA.

**Comparative Example 8**

A separator was prepared in the same manner as in Example 1, except that adipic acid was used as a crosslinking agent instead of the citric acid of Example 1.

**Heat shrinkage rate in electrolyte (units: %)**

Samples were prepared by cutting the separators of the examples and comparative examples into a size of 3 cm×8 cm. A positive electrode slurry was prepared by mixing 97 wt% of a lithium-cobalt-nickel-aluminum oxide as a positive electrode active material, 1.5 wt% of carbon nanotubes as a conductive material, and 1.5 wt% of polyvinylidene fluoride, and adding N-methyl-2-pyrrolidone. A positive electrode was prepared by coating an aluminum foil with the prepared positive electrode slurry, and then drying and rolling the resulting aluminum foil. A negative electrode slurry was prepared by mixing 97.4 wt% of graphite as a negative electrode active material, 1.0 wt% of carboxymethyl cellulose, 1.5 wt% of styrene-butadiene rubber, and 0.1 wt% of carbon nanotubes as a conductive material, and adding distilled water. A negative electrode was prepared by coating a copper foil with the prepared negative electrode slurry and drying and rolling the resulting copper foil.

One sample was placed between the positive electrode and the negative electrode to form three sets of stacked structures (the positive electrode-the sample-the negative electrode), and then the stacked structures were put into a pouch. 2.5 g of an electrolyte (1.5 M $LiPF_6$-dissolved ethylene carbonate, ethylmethyl carbonate, and dimethyl carbonate (volume ratio of 30:50:20)) was injected to completely immerse the stacked structure in an electrolyte, sealed and then left at 25 °C for 12 hours, followed by leaving the stacked structure in an oven at 150 °C for 1 hour. Afterward, the sample was taken from the pouch, and then a heat shrinkage rate was calculated. The heat shrinkage rate was able to be calculated by Mathematical Formula 1 below.

Mathematical Formula 1:

$$\text{Heat shrinkage rate} = (L0-L1)/L0\times 100.$$

L0 is the initial length of the separator, and L1 is the length of the separator after leaving the separator at 150 °C for 1 hour.

**Wet adhesion (units: gf/mm)**

A rechargeable lithium battery was manufactured in the same manner as in "Heat shrinkage rate in electrolyte." The manufactured rechargeable lithium battery was maintained at 50 °C under a load of 200 kg for 2 hours. Afterward, a separator and a negative electrode were separated approximately 10 mm to 20 mm, while fixing the negative electrode to the lower grip, the separator was fixed to the upper grip so that the distance between the grips was 20 mm, and the separator was stretched at a speed of 100 mm/min in the 180° direction from the negative electrode. An average value was calculated by measuring the force needed to peel the separator 40 mm (away from the negative electrode) three times. Adhesion was measured using a universal testing machine (UTM).

**Heat exposure**

Heat exposure was evaluated according to PV8450. A battery was manufactured using a separator as described above. The cell (4.3 V, 1.5 Ah, SOC 100%) was placed in a chamber, and the chamber temperature was increased in the order of Step 1, Step 2, and Step 3 below at a heating rate of 3 °C/min to evaluate the battery stability.

Step 1: 60 °C, 2 hr
Step 2: 130 °C, 0.5 hr
Step 3: 200 °C, 0.5 hr

Evaluation criteria:
Evaluation was performed according to the criteria below, and it is preferable for STEP 2 to be L2 or less and for STEP 3 to be L6 or less.

L0: No response
L1: Reversible damage to the battery performance occurred.
L2: Irreversible damage to the battery performance occurred.
L3: The electrolyte weight of the battery decreased by less than 50%
L4: The electrolyte weight of the battery decreased by 50% or more.
L5: Ignition or flaming occurred in the battery (no rupture or explosion was observed)
L6: Battery rupture (no explosion)
L7: Battery explosion

**High-temperature lifespan**

A positive electrode slurry was prepared by adding lithium-cobalt oxide ($LiCoO_2$), polyvinylidene fluoride (PVdF), and carbon black in a weight ratio of 96:2:2 to N-methyl-2-pyrrolidone. A positive electrode was prepared by coating an aluminum foil with the slurry, and drying and rolling the resulting aluminum foil.
A negative electrode slurry was prepared by adding graphite, styrene butadiene rubber, and carboxymethyl cellulose in a weight ratio of 98:1:1 to distilled water. A negative electrode was prepared by coating a copper foil with the slurry, and drying and rolling the resulting copper foil.
The separators of the examples and comparative examples were each interposed between the prepared positive and negative electrodes to prepare jelly-roll electrode assemblies in a winding configuration. An electrolyte, prepared by adding 1.15 M $LiPF_6$ to a solvent mixed with ethylene carbonate, ethylmethyl carbonate, and diethyl carbonate at a volume ratio of 3:5:2, was injected into each of the prepared electrode assemblies, and the prepared electrode assemblies were sealed to manufacture the respective rechargeable lithium batteries.
Initial charging and discharging were performed on the respective rechargeable lithium batteries by charging at 55 °C with a constant current of 0.1 C up to the uppermost voltage of 4.25 V, and discharging with a constant current of 0.1 C to a discharge cut-off voltage of 3.5 V. Afterward, charging and discharging were repeated for 10 cycles at 0.5 C in the voltage range of 3.5 V to 4.25 V.
After 10 cycles, the temperature of the rechargeable lithium battery was measured, and the degree of increase relative to the initial temperature was designated as ΔT. In addition, the efficiency was calculated according to Mathematical Formula 2 below. ΔT is preferably 5 °C or less, and the efficiency is preferably 97.5% or more.

Mathematical Formula 2:

$$\text{Efficiency} = (\text{Discharge capacity after 10 cycles}/\text{Discharge capacity after 1 cycle}) \times 100.$$

Table 1:

| | First binder | Second binder | Weight ratio 1 | Crosslinking agent | Weight ratio 2 | Adhesive binder (Tg) | Shrinkage rate in electrolyte | Wet adhesion | Battery evaluation | | |
|---|---|---|---|---|---|---|---|---|---|---|---|
| | | | | | | | | | Heat exposure (step 2/step 3) | High-temperature lifespan (ΔTemp , | Efficiency |
| Example 1 | Prepartion Ex-ample 1 | CMC-Na | 50:50 | Citric acid, 10 | 1:20 | 90 | 6.4 | 0.19 | L2/L5 | 4.0 | 98 |
| Example 2 | Preparation Ex-ample 1 | CMC-Na | 50:50 | Citric acid, 20 | 1:20 | 90 | 6.4 | 0.18 | L2/L5 | 2.5 | 98 |
| Example 3 | Preparation Ex-ample 1 | CMC-Na | 50:50 | Citric acid, 5 | 1:20 | 90 | 12.6 | 0.20 | L2/L6 | 2.1 | 98 |
| Example 4 | Preparation Ex-ample 1 | CMC-Na | 50:50 | Citric acid, 50 | 1:20 | 90 | 5.9 | 0.17 | L2/L5 | 1.9 | 98 |
| Example 5 | Preparation Ex-ample 1 | CMC-Na | 60:40 | Citric acid, 10 | 1:20 | 90 | 5.7 | 0.18 | L2/L5 | 3.0 | 95 |
| Example 6 | Preparation Ex-ample 1 | CMC-Na | 80:20 | Citric acid, 10 | 1:20 | 90 | 5.4 | 0.19 | L2/L5 | 3.4 | 95 |
| Example 7 | Preparation Ex-ample 1 | CMC-Na | 30:70 | Citric acid, 10 | 1:20 | 90 | 9.8 | 0.20 | L2/L6 | 2.5 | 98 |
| Example 8 | Preparation Ex-ample 2 | CMC-Na | 50:50 | Citric acid, 10 | 1:20 | 90 | 10.5 | 0.19 | L2/L6 | 3.1 | 97 |
| Comparative Ex-ample 1 | Preparation Ex-ample 1 | - | 100:0 | Citric acid, 10 | 1:20 | 90 | 17.2 | 0.19 | L3/L7 | 4.6 | 98 |
| Comparative Ex-ample 2 | - | CMC-Na | 0:100 | Citric acid, 10 | 1:20 | 90 | 47.9 | 0.18 | L3/L7 | 2.3 | 98 |
| Comparative Ex-ample 3 | Preparation Ex-ample 1 | CMC-Na | 50:50 | - | 1:20 | 90 | 54.6 | 0.18 | L3/L7 | 2.5 | 98 |
| Comparative Ex-ample 4 | Preparation Ex-ample 1 | CMC-Na | 50:50 | Citric acid, 2 | 1:20 | 90 | 18.1 | 0.19 | L3/L7 | 2.5 | 98 |
| Comparative Ex-ample 5 | Preparation Ex-ample 1 | CMC-Na | 50:50 | Citric acid, 55 | 1:20 | 90 | 27.6 | 0.18 | L3/L7 | 6.1 | 97 |
| Comparative Ex-ample 6 | Preparation Ex-ample 1 | CMC-Na | 50:50 | Citric acid, 10 | 1:20 | 50 | 5.8 | 0.35 | L2/L6 | 10 | 92 |

(continued)

| | First binder | Second binder | Weight ratio 1 | Crosslinking agent | Weight ratio 2 | Adhesive binder (Tg) | Shrinkage rate in electrolyte | Wet adhesion | Battery evaluation | | |
|---|---|---|---|---|---|---|---|---|---|---|---|
| | | | | | | | | | Heat exposure (step 2/step 3) | High-temperature lifespan (ΔTemp , | Efficiency |
| Comparative Example 7 | Preparation Example 1 | CMC-Na | 50:5 0 | Citric acid, 10 | 1:20 | 130 | 5.9 | 0.03 | L2/L6 | 7.4 | 95 |
| Comparative Example 8 | Preparation Example 1 | CMC-Na | 50:5 0 | Adipic acid, 10 | 1:20 | 90 | 38.7 | 0.18 | L3/L7 | 3.8 | 97 |

*In Table 1,
Weight ratio 1: the weight ratio of the first binder : the second binder
Weight ratio 2: the weight ratio of a total of the first binder and the second binder : the filler

As shown in Table 1 above, the separators of the Examples can increase the heat resistance of the battery during high-temperature exposure, and increase the reliability of the battery by improving the battery lifespan at high temperatures. In addition, the separators of the Examples can increase the lifespan of the battery due to the low heat shrinkage rate thereof in an electrolyte and high wet adhesion.

In addition, although not shown in Table 1 above, the separators of the Examples can increase the safety of the battery by inhibiting ignition and explosion of the battery caused by external impact.

However, as shown in Table 1 above, the separators of the Comparative Examples were not effective on a heat shrinkage rate, wet adhesion, and high-temperature lifespan, compared to those of the Examples.

**Example 9**

A dispersion was prepared by mixing the acrylic binder prepared in Preparation Example 1 (10 wt% in distilled water), boehmite (particle size (D100): 500 nm, particle size (D50): 200 nm, plate-shaped) as a first filler, and cellulose nanofibers (length: 5 μm, diameter: 50 nm, no surface modification) as a second filler, adding water as a solvent, milling the resulting mixture using a bead mill at 25 °C for 30 minutes, and then dispersing the milled result.

A composition for a coating layer was prepared by adding CMC-Na (weight average molecular weight: 200,000 g/mol) and citric acid to the dispersion, and adding water to have a total solid content of 20 wt%.

The composition for a coating layer includes 50 parts by weight of an acrylic binder; 50 parts by weight of CMC-Na; and 10 parts by weight of citric acid with respect to 100 parts by weight of the total of the acrylic binder and the CMC-Na.

The composition for a coating layer has a weight ratio of a total of the acrylic binder and CMC-Na to a total of the fillers (first filler+second filler) of 1:20, and the weight ratio of the second filler to the first filler is 1:1.

A separator was prepared by coating both surfaces of a polyethylene-based film (thickness: 8 μm (SK), air permeability: 120 sec/100 cc, and puncture strength: 480 kgf) as a porous substrate with the composition for a coating layer to a thickness of 2 μm through a die coating method, and drying and aging the resulting film in an oven at 100 °C for 16 hours.

**Examples 10 to 19**

Separators were prepared in the same manner as in Example 9, except that the contents of an acrylic binder, CMC-Na, citric acid, and first and second filler used in Example 9 were changed as shown in Table 2 below.

**Example 20**

A separator was prepared in the same manner as in Example 9, except that the binder of Preparation Example 2 was used instead of the binder of Preparation Example 1.

**Comparative Example 9**

A separator was prepared in the same manner as in Example 9, except that a second filler and CMC-Na were not included.

**Comparative Example 10**

A separator was prepared in the same manner as in Example 9, except that a second filler and the binder of Preparation Example 1 were not included.

**Comparative Example 11**

A separator was prepared in the same manner as in Example 9, except that a second filler and citric acid were not included.

**Comparative Examples 12 to 15**

Separators were prepared in the same manner as in Example 9, except that the contents of an acrylic binder, CMC-Na, citric acid, and first and second fillers were changed as shown in Table 2 below.

**Comparative Example 16**

A separator was prepared in the same manner as in Example 9, except that adipic acid was used as a crosslinking agent instead of the citric acid of Example 9.

**Dry heat shrinkage rate (units: %)**

Samples were prepared by cutting the separators of the examples and comparative examples into a size of 5 cm×5 cm. After leaving each sample in a convection oven at 150 °C for 1 hour, heat shrinkage rates in MD and TD were calculated. The heat shrinkage rates were calculated by Mathematical Formula 1 below.

Mathematical Formula 1:

$$\text{Heat shrinkage rate} = (L0-L1)/L0 \times 100.$$

L0 is the initial length of the separator, and L1 is the length of the separator after leaving the separator at 150 °C for 1 hour.

**Heat shrinkage rate in electrolyte (units: %)**

Heat shrinkage rates in an electrolyte were evaluated in the same manner as described above.

**Long lifespan (units: cycle)**

Unit cells were assembled by stacking the separator, the positive electrode and the negative electrode in that order, and then an electrolyte (1.5 M $LiPF_6$-dissolved ethylene carbonate, ethylmethyl carbonate, and dimethyl carbonate (volume ratio: 30:50:20)) was injected into the cells, thereby manufacturing a rechargeable lithium battery. The rechargeable lithium battery was repeatedly charged and discharged for as many cycles as necessary to reach and maintain a State of Health (SOH) of 80%. A long lifespan of 1300 cycles or more is preferable.

**Capacity retention rate (units: %)**

A rechargeable lithium battery including each of the separators of the examples and the comparative examples was manufactured using a negative electrode and a positive electrode, prepared by the above method. The capacity retention rate at the $400^{th}$ cycle compared to the early stage of the rechargeable battery was calculated by Mathematical Formula 2 below. Efficiency is preferably 90% or more.

Capacity retention rate = (Discharge capacity after 400th cycle)/(Initial discharge capacity)$\times$100. Mathematical Formula 2:

**Substrate adhesion (units: N)**

The prepared separator was cut to a size of 3 cm$\times$8 cm (width$\times$length), a pressure-sensitive adhesive tape (3M, width: 10 mm) was cut to a length of 150 mm, and then the tape was applied without air bubbles onto the cut separator sample along the longitudinal direction using a 3 kg rubber roller. The pressure-sensitive adhesive tape was separated approximately 50 mm from the separator, and the separator was fixed to the upper grip and the tape to the lower grip. Here, the distance between the grips is 20 mm. After sample fixing, peeling was performed at a speed of 20 mm/min in the 180° direction. After peeling started, the force needed to peel the separator approximately 40 mm was measured three times to obtain an average value.

Table 2:

| | First binder | Second binder | Weight ratio 1 | Crosslinking agent, content | Weight ratio 2 | Weight ratio 3 | Dry shrinkage rate | | Shrinkage rate in electrolyte | | Long lifespan | Capacity retention rate | Substrate adhesion |
|---|---|---|---|---|---|---|---|---|---|---|---|---|---|
| | | | | | | | MD | TD | MD | TD | | | |
| Example 9 | Preparation Example 1 | CMC-Na | 50:50 | Citric acid, 10 | 1:1 | 1:20 | 6.0 | 5.1 | 11.7 | 7 | 1320 | 91 | 2.44 |
| Example 10 | Preparation Example 1 | CMC-Na | 50:50 | Citric acid, 5 | 1:1 | 1:20 | 7.0 | 6.3 | 9 | 8 | 1332 | 91 | 2.30 |
| Example 11 | Preparation Example 1 | CMC-Na | 50:50 | Citric acid, 5 | 1:2 | 1:20 | 6.2 | 4.8 | 8.3 | 8.8 | 1348 | 92 | 2.66 |
| Example 12 | Preparation Example 1 | CMC-Na | 50:50 | Citric acid, 50 | 1:10 | 1:20 | 4.0 | 3.6 | 6.4 | 6 | 1375 | 93 | 2.49 |
| Example 13 | Preparation Example 1 | CMC-Na | 50:50 | Citric acid, 10 | 1:10 | 1:20 | 3.9 | 2.4 | 6.0 | 5.6 | 1370 | 93 | 2.63 |
| Example 14 | Preparation Example 1 | CMC-Na | 50:50 | Citric acid, 10 | 1:50 | 1:20 | 2.1 | 1.3 | 2.2 | 2.7 | 1388 | 94 | 2.89 |
| Example 15 | Preparation Example 1 | CMC-Na | 50:50 | Citric acid, 20 | 1:50 | 1:20 | 4.0 | 3.5 | 8 | 11 | 1362 | 94 | 2.91 |
| Example 16 | Preparation Example 1 | CMC-Na | 50:50 | Citric acid, 10 | 1:100 | 1:20 | 2.5 | 2.1 | 3.5 | 2.8 | 1392 | 95 | 2.89 |
| Example 17 | Preparation Example 1 | CMC-Na | 50:50 | Citric acid, 10 | 1:150 | 1:20 | 2.8 | 1.7 | 2.8 | 2.7 | 1412 | 95 | 2.78 |
| Example 18 | Preparation Example 1 | CMC-Na | 50:50 | Citric acid, 10 | 1:200 | 1:20 | 2.0 | 1.8 | 3.1 | 2.8 | 1420 | 96 | 2.74 |
| Example 19 | Preparation Example 1 | CMC-Na | 60:40 | Citric acid, 10 | 1:200 | 1:20 | 3.0 | 2.3 | 3.4 | 2.8 | 1320 | 93 | 2.55 |
| Example 20 | Preparation Example 2 | CMC-Na | 50:50 | Citric acid, 10 | 1:200 | 1:20 | 4.3 | 4.7 | 6.7 | 7.4 | 1315 | 92 | 2.98 |
| Comparative Example 9 | Preparation Example 1 | - | 100:0 | Citric acid, 10 | - | 1:20 | 4.0 | 2.5 | 8 | 10 | 1176 | 76 | 1.42 |
| Comparative Example 10 | - | CMC-Na | 0:100 | Citric acid, 10 | - | 1:20 | 21 | 15 | 34 | 21 | 1032 | 70 | 2.94 |

(continued)

| | First binder | Seco nd binde r | Weig ht ratio 1 | Crosslink ing agent, content | Weig ht ratio 2 | Weig ht ratio 3 | Dry shrinkag e rate | | Shrinka ge rate in electroly te | | Long lifesp an | Capac ity retenti on rate | Substr ate adhesi on |
|---|---|---|---|---|---|---|---|---|---|---|---|---|---|
| | | | | | | | M D | TD | M D | T D | | | |
| Comparat ive Ex-ample 11 | Preparat ion Exampl e 1 | CMC -Na | 50:5 0 | Citric acid, 0 | - | 1:20 | 7. 0 | 5.5 | 29 | 36 | 1087 | 77 | 2.48 |
| Comparat ive Example 12 | Preparat ion Exampl e 1 | CMC -Na | 50:5 0 | Citric acid, 20 | 1:25 0 | 1:20 | 8. 0 | 9.0 | 10 | 15 | 1289 | 88 | 2.84 |
| Comparat ive Example 13 | Preparat ion Exampl e 1 | CMC -Na | 50:5 0 | Citric acid, 10 | 1:25 0 | 1:20 | 9. 5 | 10. 0 | 14 | 19 | 1262 | 85 | 2.74 |
| Comparat ive Example 14 | Preparat ion Exampl e 1 | CMC -Na | 50:5 0 | Citric acid, 20 | 1:0.5 | 1:20 | 7. 5 | 6.5 | 9.5 | 12 | 1230 | 85 | 2.64 |
| Comparat ive Example 15 | Preparat ion Exampl e 1 | CMC -Na | 50:5 0 | Citric acid, 10 | 1:0.5 | 1:20 | 30 | 35 | 54 | 41 | 1102 | 84 | 2.74 |
| Comparat ive Example 16 | Preparat ion Exampl e 1 | CMC -Na | 50:5 0 | Adipic acid, 10 | 1:20 0 | 1:20 | 9. 9 | 8.1 | 28 | 21 | 1210 | 84 | 2.50 |

*In table 2,
Weight ratio 1: the weight ratio of the first binder to the second binder
Weight ratio 2: the weight ratio of the second filler to the first filler
Weight ratio 3: the weight ratio of the total of the first binder and the second binder to the total of the first filler and the second filler

As shown in Table 2, the separators of the examples provide a low dry heat shrinkage rate and a low heat shrinkage rate in an electrolyte, improve the lifespan of the battery and a capacity retention rate, and exhibit high substrate adhesion. In addition, although not shown in Table 2, the separators of the examples can reduce or suppress battery ignition caused by external impact.
However, the separators of the comparative examples did not exhibit significant results regarding the heat shrinkage rate, lifespan of the battery, capacity retention rate, and substrate adhesion compared to those of the examples.

**Example 21**

A dispersion was prepared by mixing the acrylic binder prepared in Preparation Example 1 (10 wt% in distilled water) and boehmite (particle size (D100): 500 nm, particle size (D50): 200 nm, plate-shaped) as a filler, adding water as a solvent, milling the resulting mixture using a bead mill at 25 °C for 30 minutes, and then dispersing the milled result.
A composition for a coating layer was prepared by adding CMC-Na (weight average molecular weight: 200,000 g/mol), citric acid, and trimethylolpropane tris(2-methyl-1-aziridinepropionate) (trifunctional aziridine-based crosslinking agent), and adding water such that a total solid content became 20 wt%.
The composition for a coating layer includes 50 parts by weight of an acrylic binder; 50 parts by weight of CMC-Na; and 10 parts by weight of the mixture of the citric acid and the trimethylolpropane tris(2-methyl-1-aziridinepropionate) (weight ratio: 50:50) with respect to 100 parts by weight of the total of the acrylic binder and CMC-Na. The composition for a coating layer has a weight ratio of the total of the acrylic binder and the CMC-Na to the filler of 1:20.
A separator was prepared by coating both surfaces of a polyethylene-based film (thickness: 8 μm (SK), air permeability: 120 sec/100 cc, and puncture strength: 480 kgf) as a porous substrate with the composition for a coating layer to a thickness of 2 μm through a die coating method, and drying and aging the resulting film in an oven at 100 °C for 16 hours.

**Examples 22 to 26**

Separators were prepared in the same manner as in Example 21, except that the contents of an acrylic binder, CMC-Na, citric acid, and trimethylolpropane tris(2-methyl-1-aziridinepropionate) used in Example 21 were changed as shown in Table 3 below.

**Example 27**

A separator was prepared in the same manner as in Example 21, except that the binder of Preparation Example 2 was used instead of the binder of Preparation Example 1.

**Comparative Example 17**

A separator was prepared in the same manner as in Example 21, except that CMC-Na was not included.

**Comparative Example 18**

A separator was prepared in the same manner as in Example 21, except that the acrylic binder of Preparation Example 1 was not included.

**Comparative Example 19**

Separators were prepared in the same manner as in Example 21, except that polyvinylalcohol (PVA) was used instead of the acrylic binder of Preparation Example 1.

**Comparative Example 20**

A separator was prepared in the same manner as in Example 21, except that PVA was used instead of CMC-Na.

**Comparative Examples 21 and 22**

Separators were prepared in the same manner as in Example 21, except that the weight ratio of the citric acid to the trimethylolpropane tris(2-methyl-1-aziridinepropionate) was changed as shown in Table 3 below.

**Comparative Example 23**

A separator was prepared in the same manner as in Example 21, except that adipic acid was used instead of the citric acid.

**Tensile strength (units: MPa) and elongation rate (units: %) of crosslinked product**

An aqueous solution where the total solid content was 10 wt% was prepared in the same manner as in each of the examples and comparative examples, except that water was added to the composition for a coating layer instead of the filler.

A 40 μm-thick film was formed by injecting 2 mL to 3 mL of the preprepared aqueous solution into a mold with a size of 1 cm×10 cm (width×length), drying the mold in an oven at 50 °C for 3 hours, and then aging the film in the oven at 85 °C for 16 hours. A sample with a size of 1 cm×2 cm (width×length) obtained from the film was subjected to measurement of a tensile strength and an elongation rate using UTM.

**Heat shrinkage rate in electrolyte (units:%)**

Evaluation was conducted in the same manner as described in "Heat shrinkage rate in electrolyte" above.

**Cell characteristics:**

A cylindrical cell having each of the separators of the examples and comparative examples and a SOC of 50% was evaluated using the international standard UN internal short circuit test method. In this method, the cells were placed on a test block (SS41 steel, plate, thickness: 70 mm), and a cylindrical weight of 9.1±0.1 kg with a diameter of 15.8±0.1 mm was freely dropped onto the cells from a height of 630±25 mm to check for battery explosion or ignition. The number of samples of a total of the evaluated samples (10 samples) that passed the impact test (i.e., exhibited no cell explosion, rupture, or ignition) is presented. A result was evaluated as NG when the number of failures was 3 or more, and as OK when the number of failures was 2 or less.

**Delamination of coating layer from porous substrate**

Evaluation was conducted by observing visually whether delamination of the coating layer occurred in water while the separator sample cut to a size of 1 cm×1 cm was immersed in water at 25 °C for 24 hours.

Table 3:

| | First binder | Sec ond bin der | Wei ght rati o 1 | Crosslinking agent | | | | Wei ght rati o 2 | Crosslinked product | | Shrink age rate | | Cell characte ristics | Delami nation of coating layer |
|---|---|---|---|---|---|---|---|---|---|---|---|---|---|---|
| | | | | Cit ric aci d | Aziri dine-based | Adi pic aci d | Total of crossli nking agents | | Ten sile stre ngth (MP a) | Elong ation rate (%) | M D ( % ) | T D ( % ) | | |
| Examp le 21 | Prepar ation Exam ple 1 | CM C-Na | 50: 50 | 50 | 50 | 0 | 10 | 1:2 0 | 181 | 15 | 4. 5 | 4. 8 | OK | No |
| Examp le 22 | Prepar ation Exam ple 1 | CM C-Na | 50: 50 | 80 | 20 | 0 | 10 | 1:2 0 | 340 | 7 | 5 | 4. 5 | OK | No |
| Examp le 23 | Prepar ation Exam ple 1 | CM C-Na | 50: 50 | 20 | 80 | 0 | 10 | 1:2 0 | 132 | 37 | 3. 5 | 4. 5 | OK | No |
| Examp le 24 | Prepar ation Exam ple 1 | CM C-Na | 50: 50 | 50 | 50 | 0 | 20 | 1:2 0 | 268 | 10 | 3. 5 | 5 | OK | No |
| Examp le 25 | Prepar ation Exam ple 1 | CM C-Na | 60: 40 | 50 | 50 | 0 | 5 | 1:2 0 | 114 | 12 | 3. 8 | 4 | OK | No |
| Examp le 26 | Prepar ation Exam ple 1 | CM C-Na | 80: 20 | 50 | 50 | 0 | 50 | 1:2 0 | 402 | 5 | 4. 5 | 5 | OK | No |
| Examp le 27 | Prepar ation Exam ple 2 | CM C-Na | 50: 50 | 50 | 50 | 0 | 10 | 1:2 0 | 154 | 14 | 5 | 5 | OK | No |
| Compa rative Examp le 17 | Prepar ation Exam ple 1 | - | 100 :0 | 50 | 50 | 0 | 10 | 1:2 0 | 68 | 7 | 4. 8 | 5. 0 | NG | No |
| Compa rative Examp le 1 8 | - | CM C-Na | 0:1 00 | 50 | 50 | 0 | 10 | 1:2 0 | 104 | 8 | 5 0 | 5 0 | NG | Yes |

(continued)

| | First binder | Second binder | Weight ratio 1 | Crosslinking agent | | | | Weight ratio 2 | Crosslinked product | | Shrinkage rate | | Cell characteristics | Delamination of coating layer |
|---|---|---|---|---|---|---|---|---|---|---|---|---|---|---|
| | | | | Citric acid | Aziridine-based | Adipic acid | Total of crosslinking agents | | Tensile strength (MPa) | Elongation rate (%) | MD (%) | TD (%) | | |
| Comparative Example 19 | PVA | CMC-Na | 50: 50 | 50 | 50 | 0 | 10 | 1:20 | 108 | 3 | 50 | 50 | NG | No |
| Comparative Example 20 | Preparation Example 1 | PVA | 50: 50 | 50 | 50 | 0 | 10 | 1:20 | 88 | 38 | 50 | 50 | NG | No |
| Comparative Example 21 | Preparation Example 1 | CMC-Na | 50: 50 | 10 | 90 | 0 | 10 | 1:20 | 230 | 20 | 15 | 11 | OK | Yes |
| Comparative Example 22 | Preparation Example 1 | CMC-Na | 50: 50 | 90 | 10 | 0 | 10 | 1:20 | 340 | 2 | 3.5 | 3.4 | OK | Yes |
| Comparative Example 23 | Preparation Example 1 | CMC-Na | 50: 50 | 0 | 50 | 50 | 10 | 1:20 | 88 | 2 | 16 | 18 | NG | Yes |

*In Table 3,
Weight ratio 1: the weight ratio of the first binder to the second binder
Weight ratio 2: the weight ratio of the mixture of the first binder and the second binder to the filler
Total of crosslinking agents: the content of the crosslinking agents with respect to 100 parts by weight of the total of the first binder and the second binder

As shown in Table 3, the separators of the examples contained the crosslinked product with both a high elongation rate and a high tensile strength. Therefore, the separators of the examples can inhibit ignition and explosion of the battery due to external impact, thereby enhancing the reliability and stability of the battery. In addition, the separators have both a low dry heat shrinkage rate and a low heat shrinkage rate in an electrolyte, thereby enhancing the lifespan of the battery. In addition, the separator can enhance the reliability of the battery because there is no delamination of the coating layer from the substrate.

However, in Table 3, the separators of the Comparative Examples did not show a noticeable effect compared to the case of the Examples described above.

Although the example embodiments of the present disclosure are described above, the present disclosure is not limited thereto, and it is possible to implement various modifications within the scope of the claims, the detailed description of the present disclosure, and the accompanying drawings. These modifications also fall within the scope of the present disclosure.

## Claims

**1.** A separator for a rechargeable battery, the separator comprising:

a porous substrate (1), and a first layer (5) and a second layer (7) located on at least one surface of the porous substrate (1),
wherein the second layer (7) comprises a (meth)acrylic adhesive binder (6) having a glass transition temperature of ≥ 50 °C and ≤ 130 °C,
the first layer (5) comprises a crosslinked product (4) of a mixture containing a first binder and a second binder and a crosslinking agent, and a filler (3), and
wherein the first binder comprises an aqueous binder,
the second binder comprises a carboxyalkyl cellulose-based compound or a salt thereof,
the crosslinking agent contains citric acid, and
the citric acid is included in a range of ≥ 5 parts by weight to ≤ 50 parts by weight with respect to 100 parts by weight of a total of the first binder and the second binder.

**2.** The separator of claim 1, wherein the first layer (5) comprises a composition comprising the first binder, the second binder, the crosslinking agent, and the filler (3).

**3.** The separator of claim 1 or 2, wherein the second binder comprises carboxymethyl cellulose, or an alkali metal salt thereof.

**4.** The separator according to any one of claims 1 to 3, wherein the carboxyalkyl cellulose-based compound or a salt thereof has a weight average molecular weight in a range of ≥ 100,000 g/mol to ≤ 600,000 g/mol.

**5.** The separator according to any one of claims 1 to 4, wherein the first binder and the second binder are included in a weight ratio in a range of about 80:20 to about 25:75 with respect to 100 parts by weight of the total of the first binder and the second binder.

**6.** The separator according to any one of claims 1 to 5, wherein the citric acid is included in a range of ≥ 5 parts by weight to ≤ 200 parts by weight with respect to 100 parts by weight of the first binder, and the citric acid is included in a range of ≥ 5 parts by weight to ≤ 200 parts by weight with respect to 100 parts by weight of the second binder.

**7.** The separator according to any one of claims 1 to 6, wherein the filler (3) has a particle size (D100) of about 0.7 μm or less.

**8.** The separator according to any one of claims 1 to 7, wherein the filler (3) comprises boehmite and is formed in a plate shape.

**9.** The separator according to any one of claims 1 to 8, wherein:

the first binder comprises a (meth)acrylic binder that has a crosslinking unit with the citric acid; and
the crosslinking unit with the citric acid comprises at least one or more of a unit derived from (meth)acrylic acid or a salt thereof, a unit derived from (meth)acrylamide, a unit derived from hydroxyalkyl (meth)acrylate, a unit derived

from (meth)acrylonitrile, a unit derived from (meth)acrylamido-2-methylpropansulfonic acid or a salt thereof, and a unit derived from ethyleneimine; and preferably wherein the crosslinking unit with the citric acid is included in a range of ≥ 10 mol% to ≤ 100 mol% of the (meth)acrylic binder.

**10.** The separator according to any one of claims 1 to 9, wherein the aqueous binder comprises a (meth)acrylic binder and the (meth)acrylic binder has a structural unit containing a sulfonate group; and preferably wherein the (meth)acrylic binder further comprises one or more of a structural unit derived from (meth)acrylate, a structural unit derived from (meth)acrylic acid, a structural unit containing a cyano group, and a structural unit derived from (meth)acryl amide.

**11.** The separator according to any one of claims 1 to 10, wherein the mixture of the first binder and the second binder, and the filler (3) are included at a mass ratio in a range of about 1:10 to about 1:50.

**12.** The separator according to any one of claims 1 to 11, wherein the adhesive binder (6) comprises one or more of a crosslinked (meth)acrylic adhesive binder (6), and a core-shell (meth) acrylic adhesive binder (6).

**13.** A separator for a rechargeable battery, the separator comprising:

a porous substrate (1), and a coating layer (2) located on at least one surface of the porous substrate (1),
wherein the coating layer (2) comprises a crosslinked product (4) of a mixture of a first binder and a second binder and a crosslinking agent, and a mixture of a first filler and a second filler, and
wherein the first binder is an aqueous binder,
the second binder comprises a carboxyalkyl cellulose-based compound or a salt thereof,
the crosslinking agent comprises citric acid,
the citric acid is included in a range of ≥ 5 parts by weight to ≤ 50 parts by weight with respect to 100 parts by weight of the total of the first binder and the second binder,
the second filler comprises a fibrous filler, and
the weight ratio of the second filler to the first filler is in a range of about 1:1 to about 1:200.

**14.** The separator of claim 13, wherein the first filler comprises a plate-shaped or cubic filler.

**15.** The separator of claim 13 or 14, wherein the first filler comprises a hydroxide group on a surface thereof.

**16.** The separator according to any one of claims 13 to 15, wherein the filler (3) has a particle size (D100) of about 0.7 μm or less.

**17.** The separator according to any one of claims 13 to 16, wherein the second filler comprises cellulose-based nanofibers.

**18.** The separator according to any one of claims 13 to 17, wherein the second filler comprises a hydrophilic group, including at least one of a hydroxide group, a carboxylic acid group, an amine group, and an amide group, and a combination thereof on its surface.

**19.** The separator according to any one of claim 13 to 18, wherein the mixture of the first binder and the second binder, and the mixture of the first filler and the second filler are included in a mass ratio in a range of about 1:10 to about 1:50.

**20.** The separator according to any one of claims 13 to 19, wherein the carboxyalkyl cellulose-based compound or a salt thereof has a weight average molecular weight in a range of ≥ 100,000 g/mol to ≤ 600,000 g/mol.

**21.** The separator according to any one of claims 13 to 20, wherein the first binder and the second binder are included in a weight ratio in a range of about 80:20 to about 20:80 with respect to 100 parts by weight of the total of the first binder and the second binder.

**22.** The separator according to any one of claims 13 to 21, wherein:

the citric acid is included in a range of ≥ 5 parts by weight to ≤ 200 parts by weight with respect to 100 parts by weight of the first binder; and
the citric acid is included in a range of ≥ 5 parts by weight to ≤ 200 parts by weight with respect to 100 parts by weight of the second binder.

23. The separator according to any one of claims 13 to 22, wherein the first binder comprises a (meth)acrylic binder that has a crosslinking unit with the citric acid,
wherein the crosslinking unit with the citric acid comprises one or more of:

a unit derived from (meth)acrylic acid or a salt thereof;
a unit derived from (meth)acrylamide;
a unit derived from hydroxyalkyl (meth)acrylate;
a unit derived from (meth)acrylonitrile
a unit derived from (meth)acrylamido-2-methylpropansulfonic acid or a salt thereof, and
a unit derived from ethyleneimine.

24. The separator according to any one of claims 13 to 23, wherein the crosslinking unit with the citric acid is included in a range of ≥ 10 mol% to ≤ 100 mol% of the (meth)acrylic binder.

25. The separator according to any one of claims 13 to 24, wherein the aqueous binder comprises a (meth)acrylic binder and the (meth)acrylic binder comprises a structural unit containing a sulfonate group; and preferably wherein the (meth)acrylic binder further comprises one or more of:

a structural unit derived from (meth)acrylate;
a structural unit derived from (meth)acrylic acid;
a structural unit containing a cyano group; and
a structural unit derived from (meth)acryl amide.

26. The separator according to any one of claims 13 to 25, wherein the citric acid is included at about 95 wt% or more of the crosslinking agent.

27. A separator for a rechargeable battery, the separator comprising:

a porous substrate (1), and a coating layer (2) located on at least one surface of the porous substrate (1),
wherein the coating layer (2) comprises a crosslinked product (4) of a mixture of a first binder and a second binder and a crosslinking agent, and a filler (3),
wherein the first binder is an aqueous binder, and the second binder comprises a carboxyalkyl cellulose-based compound or a salt thereof,
the crosslinking agent comprises a mixture of citric acid and an aziridine-based crosslinking agent, and
the citric acid and the aziridine-based crosslinking agent are included at a weight ratio in a range of about 80:20 to about 20:80 with respect to 100 parts by weight of the mixture of the citric acid and the aziridine-based crosslinking agent.

28. The separator of claim 27, wherein the first binder and the second binder are included at a weight ratio in a range of about 85:15 to about 20:80 with respect to 100 parts by weight of the total of the first binder and the second binder.

29. The separator of claim 27 or 28, wherein the mixture of the citric acid and the aziridine-based crosslinking agent is included in a range of ≥ 5 parts by weight to ≤ 50 parts by weight with respect to 100 parts by weight of the total of the mixture of the first binder and the second binder.

30. The separator according to any one of claims 27 to 29, wherein the second binder comprises one of carboxymethyl cellulose and an alkali metal salt thereof.

31. The separator according to any one of claims 27 to 30, wherein the carboxyalkyl cellulose-based compound or a salt thereof has a weight average molecular weight in a range of ≥ 50,000 g/mol to ≤ 1,000,000 g/mol.

32. The separator according to any one of claims 27 to 31, wherein:

the citric acid is included in a range of ≥ 3 parts by weight to ≤ 200 parts by weight with respect to 100 parts by weight of the first binder; and
the citric acid is included in a range of ≥ 3 parts by weight to ≤ 200 parts by weight with respect to 100 parts by weight of the second binder.

**33.** The separator according to any one of claims 27 to 32, wherein:

the aziridine-based crosslinking agent is included in a range of ≥ 3 parts by weight to ≤ 200 parts by weight with respect to 100 parts by weight of the first binder; and
the aziridine-based crosslinking agent is included in a range of ≥ 3 parts by weight to ≤ 200 parts by weight with respect to 100 parts by weight of the second binder.

**34.** The separator according to any one of claims 27 to 33, wherein the filler (3) has a particle size (D100) of about 0.7 μm or less.

**35.** The separator according to any one of claims 27 to 34, wherein the filler (3) comprises boehmite and is formed in a plate shape.

**36.** The separator according to any one of claims 27 to 35, wherein:

the first binder comprises a (meth)acrylic binder that has a crosslinking unit with the citric acid; and
the crosslinking unit with the citric acid includes one or more of a unit derived from (meth)acrylic acid or a salt thereof, a unit derived from (meth)acrylamide, a unit derived from hydroxyalkyl (meth)acrylate, a unit derived from (meth)acrylonitrile, a unit derived from (meth)acrylamido-2-methylpropansulfonic acid or a salt thereof, and a unit derived from ethyleneimine, and preferably wherein the crosslinking unit with the citric acid is included in a range of ≥ 10 mol% to ≤ 100 mol% of the (meth)acrylic binder.

**37.** The separator according to any one of claims 27 to 36, wherein the aqueous binder comprises a (meth)acrylic binder and the (meth)acrylic binder has a structural unit comprising a sulfonate group, and preferably wherein the (meth) acrylic binder further comprises:

one or more of a structural unit derived from (meth)acrylate;
a structural unit derived from (meth)acrylic acid;
a structural unit containing a cyano group; and
a structural unit derived from (meth)acryl amide.

**38.** The separator according to any one of claims 27 to 37, wherein the mixture of the first binder and the second binder, and the filler (3) are included in a mass ratio in a range of about 1:10 to about 1:50.

**39.** A rechargeable battery, comprising:

a positive electrode;
a negative electrode; and
the separator for a rechargeable lithium battery according to any one of claims 1 to 38 located between the positive electrode and the negative electrode.

FIG. 1.

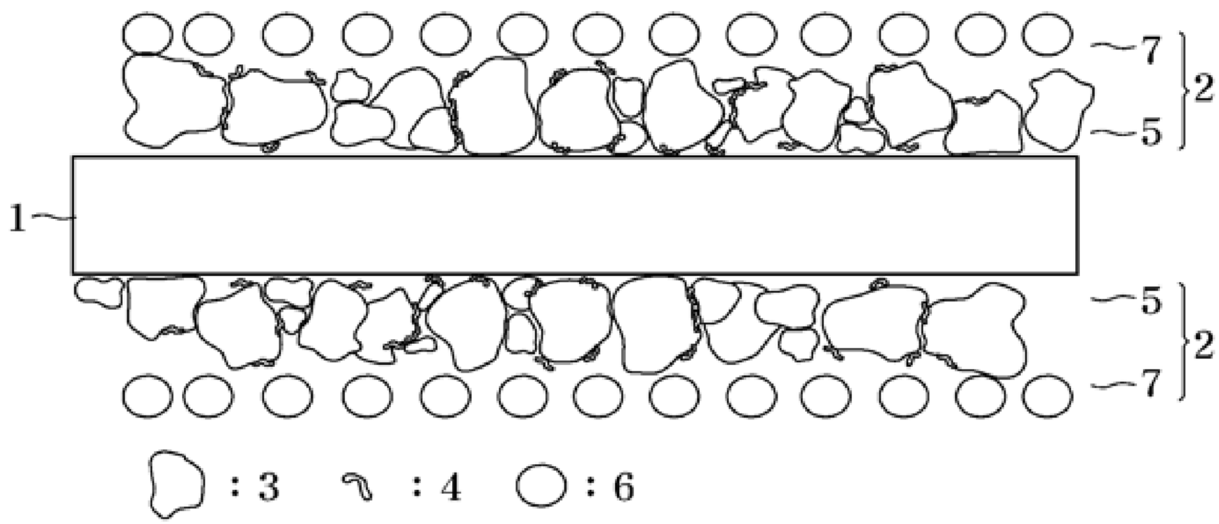

FIG. 2.

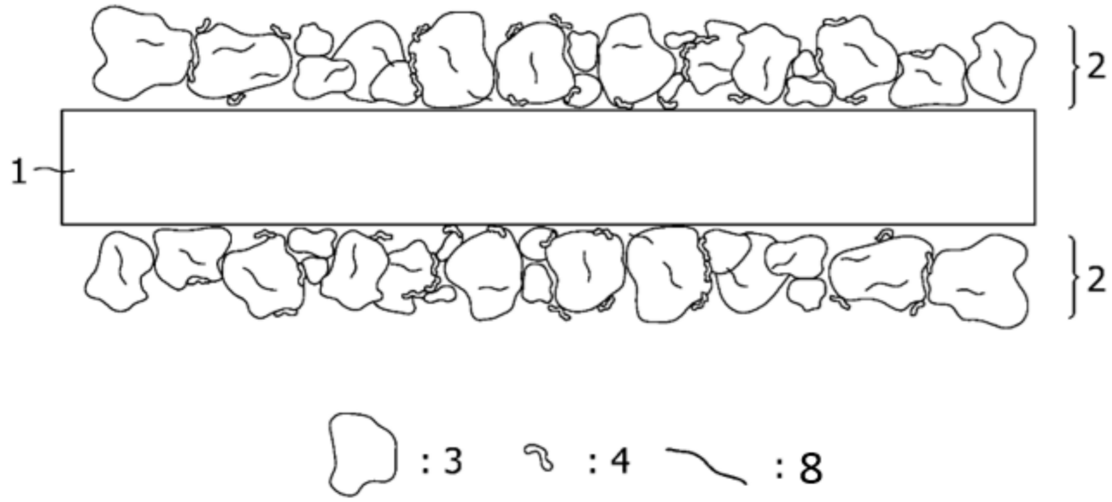

FIG. 3.

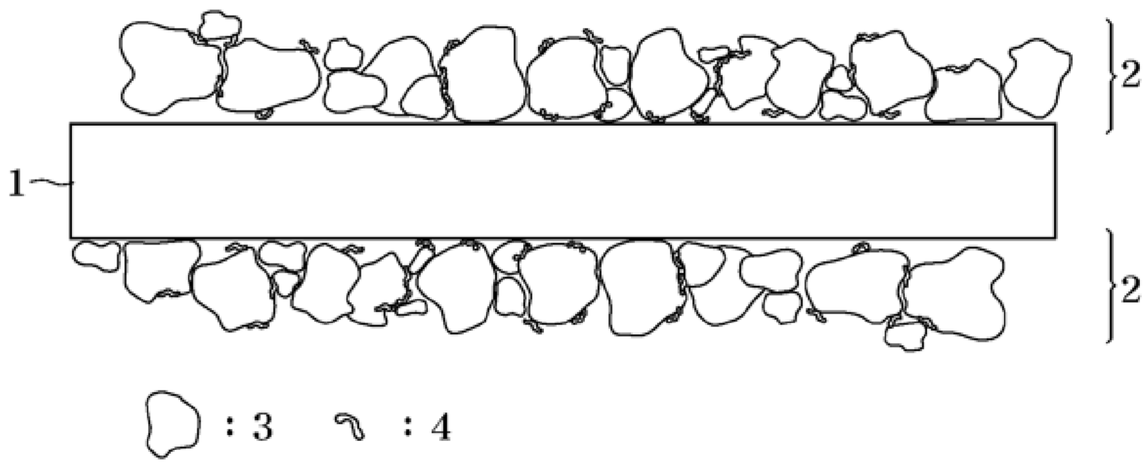

FIG. 4.

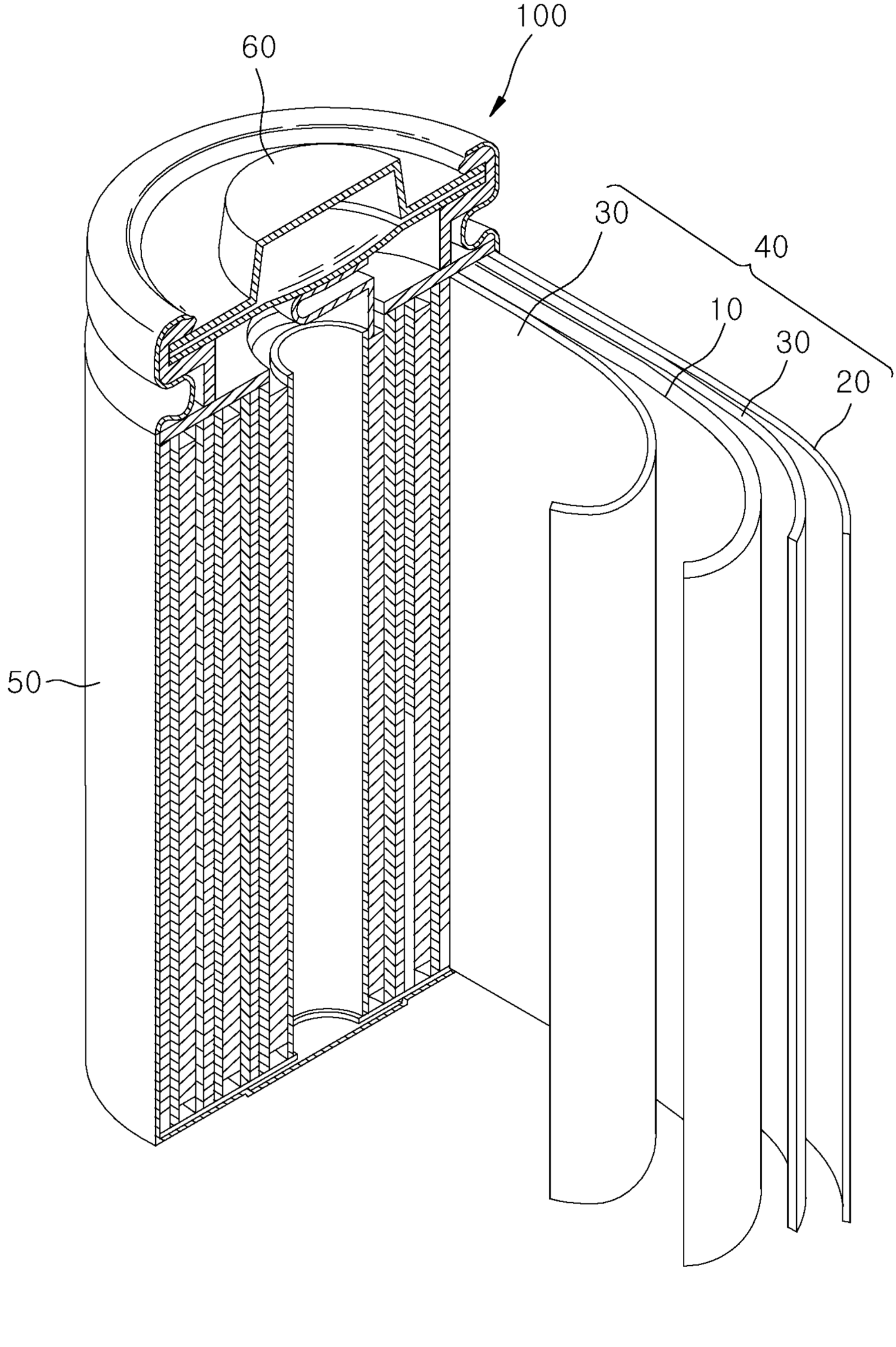

FIG. 5.

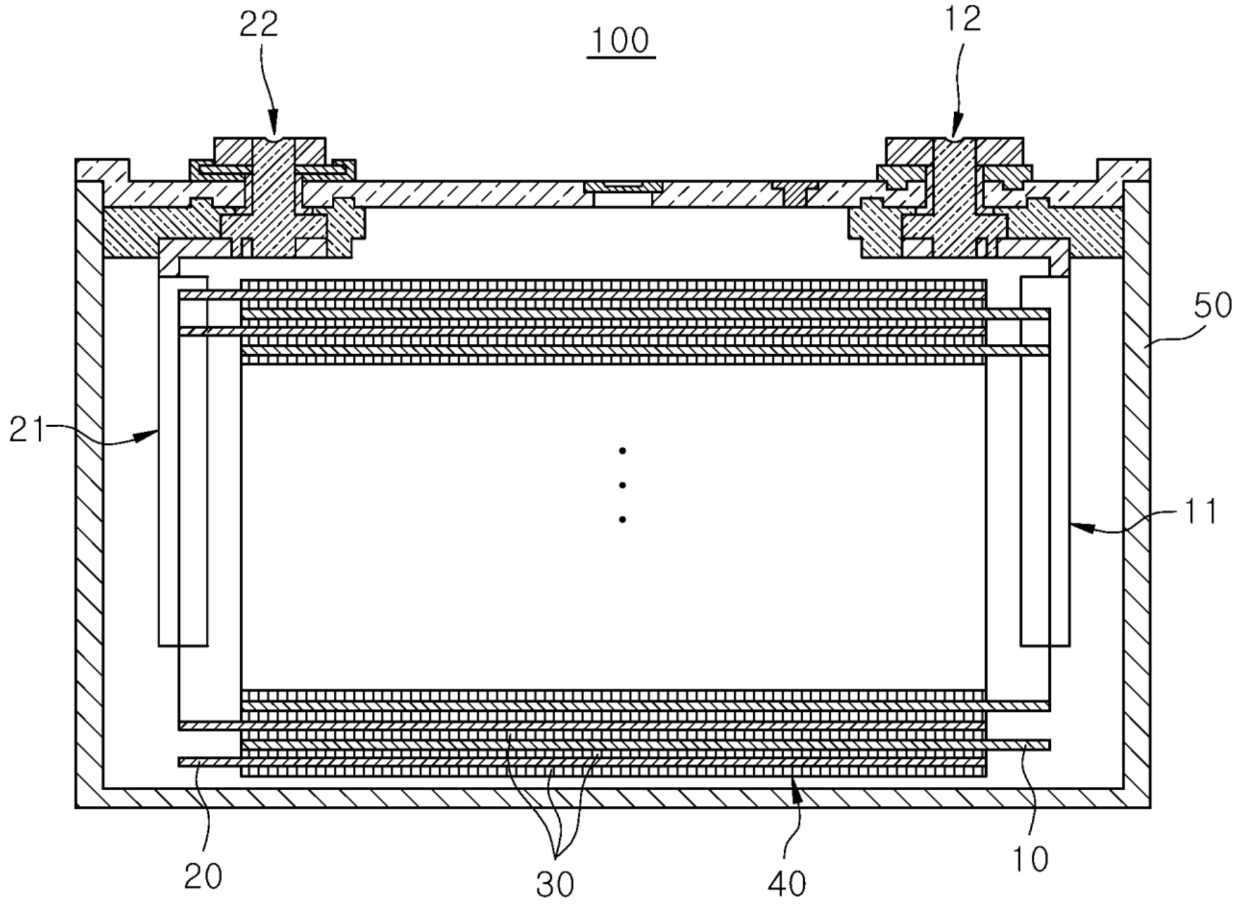

FIG. 6.

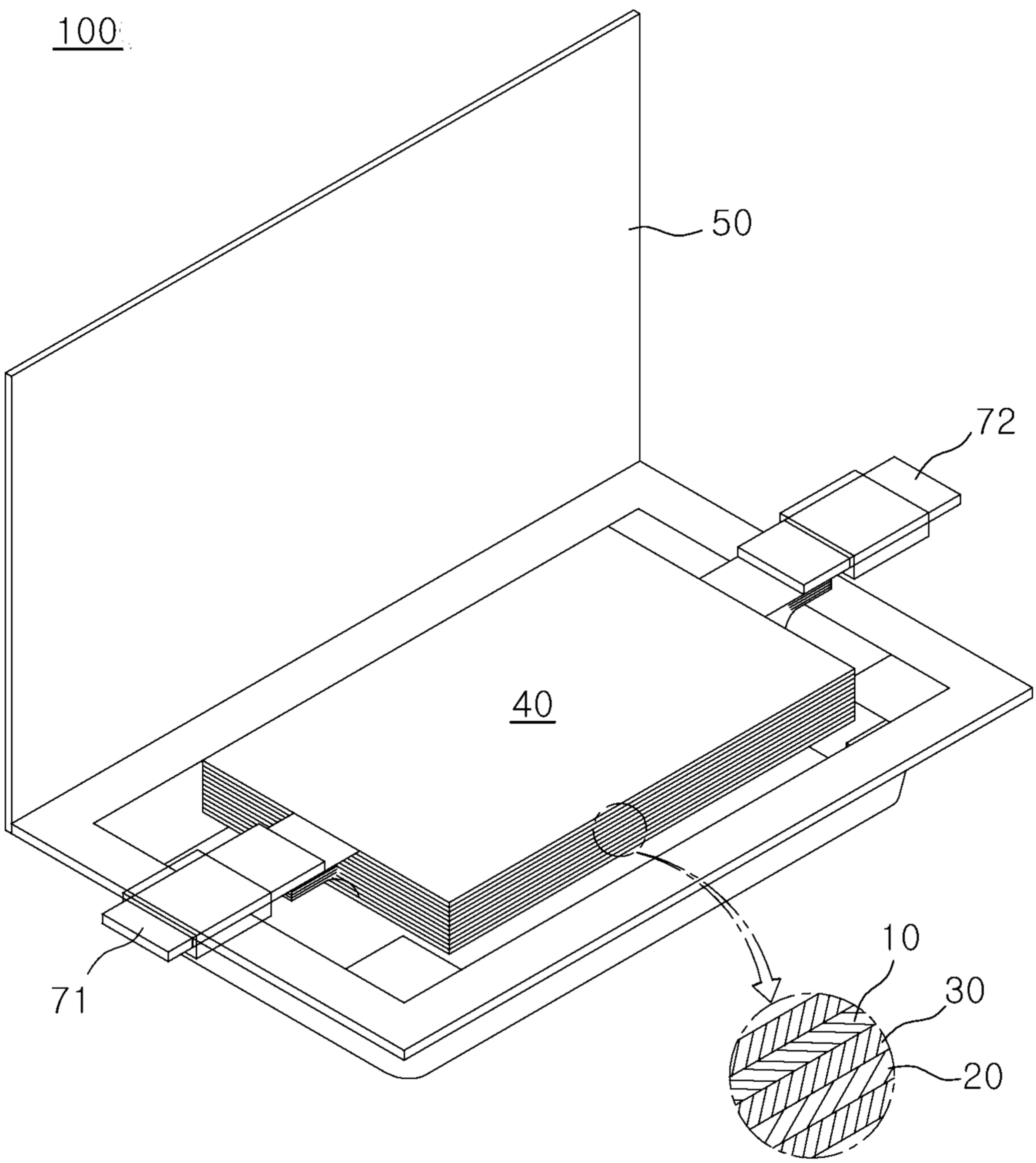

FIG. 7.

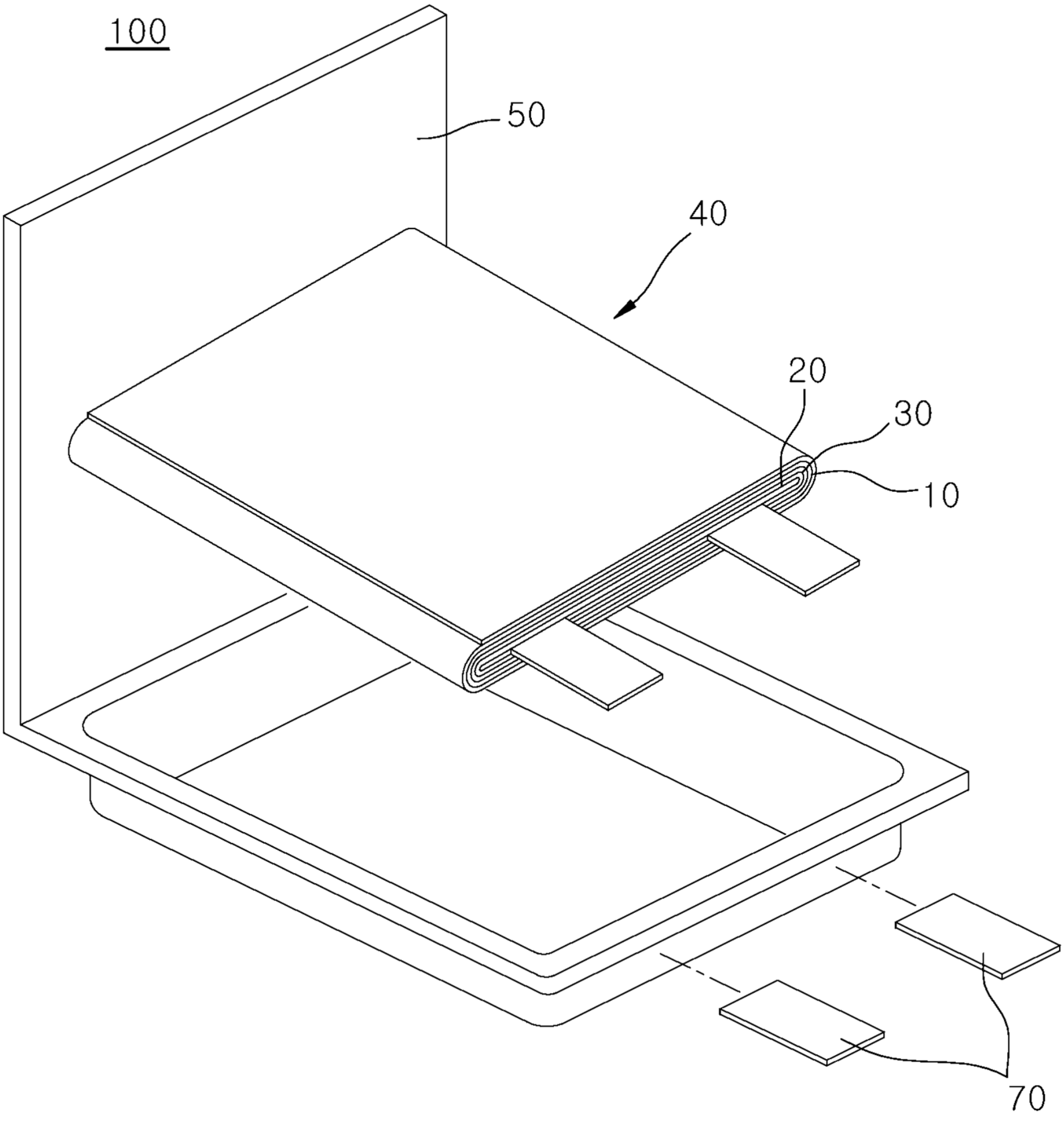

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020250012540
- KR 1020250012541
- KR 1020250012544